(19) **Europäisches Patentamt / European Patent Office / Office européen des brevets**

(11) **EP 2 188 067 B1**

(12) **FASCICULE DE BREVET EUROPEEN**

(45) Date de publication et mention
de la délivrance du brevet:
**16.11.2011 Bulletin 2011/46**

(21) Numéro de dépôt: **08852656.1**

(22) Date de dépôt: **05.09.2008**

(51) Int Cl.:
*B07C 5/02* (2006.01)    *B07C 5/36* (2006.01)
*A01D 46/28* (2006.01)

(86) Numéro de dépôt international:
**PCT/FR2008/001241**

(87) Numéro de publication internationale:
**WO 2009/066020 (28.05.2009 Gazette 2009/22)**

(54) **MACHINE DE TRI SELECTIF DE RECOLTE, ET CHAINE DE TRI COMPRENANT UNE TELLE MACHINE**

ERNTEMASCHINE MIT SELEKTIVER SORTIERUNG UND SORTIERUNGSKETTE MIT EINER SOLCHEN MASCHINE

SELECTIVE-SORTING HARVESTING MACHINE AND SORTING CHAIN INCLUDING ONE SUCH MACHINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.09.2007 FR 0706240**

(43) Date de publication de la demande:
**26.05.2010 Bulletin 2010/21**

(73) Titulaire: **PELLENC (Société Anonyme)
84120 Pertuis (FR)**

(72) Inventeurs:
• **PELLENC, Roger**
  **F-84120 Pertuis (FR)**
• **NIERO, Rémi**
  **F-69420 Condrieu (FR)**

(74) Mandataire: **Marek, Pierre
28 Rue de la Loge
B.P. Box 42413
13215 Marseille Cedex 02 (FR)**

(56) Documents cités:
**EP-A- 0 719 598**    **US-A- 4 901 861**
**US-A- 5 060 290**    **US-B1- 6 610 953**

## Description

La présente invention concerne une machine de tri sélectif de récolte, cf. US-A- 4,901,861, EP-A-0 719 598 or US-A-5,060,290. Elle concerne également une chaîne de tri comprenant cette machine.

La machine de tri selon l'invention est plus spécialement destinée au triage des composants de la vendange, mais cette machine de tri peut aussi être avantageusement utilisée pour le triage d'autres récoltes de baies ou petits fruits tels que cassis, groseilles, airelles, myrtilles, canneberges, cerises, cerises du caféier, mirabelles, etc....

En raison de l'application particulièrement avantageuse de l'invention au tri des composants de la vendange, il est décrit ci-après un exemple de mise en oeuvre de cette application, mais il est souligné que cette destination n'est aucunement limitative.

On sait que entre la récolte et le commencement de la mise en oeuvre des procédés et matériels de vinification proprement dite, la vendange est soumise à différentes opérations permettant de la débarrasser des corps étrangers indésirables pour l'élaboration des vins.

Dans la majorité des cas, que la récolte ait été réalisée manuellement ou par des moyens mécaniques (machines à vendanger), le raisin est égrappé avant et/ ou après une opération de tri.

Lorsqu'elle précède l'égrappage, et notamment dans le cas des vendanges mécaniques, l'opération de tri peut être exécutée manuellement sur tables de tri manuel linéaires ou vibrantes ou mécaniquement par exemple au moyen d'un dispositif de tri embarqué sur machine à vendanger. Dans ce cas, le tri manuel permet d'éliminer les raisins pourris ou pas assez mûrs, ainsi qu'un certain volume de corps étrangers indésirables tels que feuilles, pétioles, brindilles, insectes, petits animaux, etc...

D'autre part, est connu (FR-2 795 599) un trieur embarqué sur machine à vendanger et comportant un tamis transporteur constitué sous forme de bande sans fin et à proximité de l'extrémité déversante duquel est disposé un aspirateur, ce tamis transporteur étant constitué d'une pluralité de modules basculants disposés les uns à la suite des autres. Le trieur permet une extraction d'un fort pourcentage de feuilles, de rafles dépourvues de baies et autres débris végétaux. Il permet, en outre, d'extraire les baies ou grains détachés des rafles par le système de récolte et le jus provenant de l'éclatement d'un certain pourcentage de baies sous l'action dudit système de récolte.

L'égrappage peut être réalisé par différents types d'érafloirs ou d'égreneurs. Ces appareils ont pour fonction d'égrener la vendange, que celle-ci ait fait l'objet ou non d'un premier tri. Ils permettent aussi d'éliminer un certain pourcentage de corps étrangers. Autrement dit, ces appareils ont pour rôle de séparer les baies détachées et le jus, des autres matières végétales habituellement récoltées par la machine.

Un tri complémentaire, manuel sur table de tri, ou mécanisé sur table de tri automatique ou autres matériels spécifiques, est généralement nécessaire, en aval de l'égrappage, afin d'éliminer, sinon la totalité, du moins le maximum de corps étrangers encore présents tels que portions de feuilles, pétioles, fragments de rafles, grains verts, grains botrytisés ou millerandés et débris divers (débris de tuteurs de palissage, agrafes, insectes,....).

Après ce tri complémentaire, la récolte se compose :

- de baies mûres entières et saines ;
- de baies vertes ou millerandées ;
- de baies écrasées ou éclatées ;
- de lambeaux de peau, pépins et débris divers.

Pour permettre la production de vin de grande qualité gustative, il est souhaitable de n'utiliser que les grains de raisin parvenus à maturité, entiers et sains.

Il est prévu de réaliser une séparation qualitative des baies en trois catégories, en fonction de leur qualité, de façon à permettre, éventuellement, une vinification séparée de chacune d'elles.

Une technique proposée pour parvenir à ce résultat consiste à déverser le raisin préalablement égrappé et ayant fait l'objet d'un tri avant et/ou après l'égrappage, sur un tambour tournant autour d'un axe horizontal. Les baies sont uniquement différenciées en fonction de leur consistance. Une première catégorie est constituée de grains entiers qui n'adhèrent pas sur le rouleau, une deuxième catégorie est formée de grains éclatés et débris qui adhèrent sur le rouleau mais s'en trouve décollés par la force centrifuge générée par la rotation de celui-ci et une troisième catégorie comprenant des grains écrasés, des pellicules et autres débris qui adhèrent sur le rouleau et qui sont détachés de ce dernier par un racleur. Les baies de la première catégorie sont orientées vers un bain densimétrique. Les baies les plus mûres tombent dans le fond du bac et sont reprises par une pompe à vendange, tandis que les baies les moins mûres et les débris légers restés en surface, sont évacués avec les composants des deuxième et troisième catégories.

Un inconvénient majeur d'une telle technique est une insuffisance qualitative du résultat obtenu. Un autre inconvénient notable, est une lenteur de travail et une faible productivité incompatibles avec les importants volumes de raisin récoltés par les machines à vendanger modernes et se répercutant défavorablement sur le prix de revient des vins produits uniquement à partir des baies saines, mûres et entières sélectionnées.

Un but de la présente invention est de proposer une machine de tri permettant d'établir une discrimination efficace des composants de la vendange et de sélectionner, parmi ceux-ci, les baies mûres, saines et entières, à des cadences compatibles avec les volumes de raisin récoltés au moyen de machines à vendanger, y compris les plus performantes, ou au moyen de procédés de récolte mécanique de très haute qualité.

La machine de tri selon l'invention est du genre comprenant un système d'amenée transportant des produits à trier qui sont déchargés à l'extrémité aval dudit système d'amenée, et qui sont discriminés, par un système visionique.

Un tel dispositif est par exemple décrit dans le document EP-0 932 456 qui décrit un appareil de tri comprenant une station de triage et un convoyeur de distribution fortement incliné en direction de ladite station de triage pour le transport, jusqu'à celle-ci, d'un flux de produits à trier duquel ces derniers sont éjectés lorsqu'ils arrivent à l'extrémité inférieure déversante dudit convoyeur de distribution, lesdits produits étant discriminés durant leur chute libre, le système de discrimination comprenant des moyens pour éclairer les produits, des moyens pour analyser la lumière réfléchie par lesdits produits, et des moyens pour éjecter les produits.

Le document EP-0 705 650 décrit un dispositif de tri comparable comportant une bande transporteuse déversant les produits transportés dans la zone d'action d'une station de triage opérant pendant la chute libre des produits et comprenant un capteur optique couleur pour détecter optiquement la couleur desdits produits et un système d'évaluation pour évaluer si la couleur détectée par le capteur de couleur est ou non une couleur prédéterminée et produire un signal de discrimination selon le résultat de l'évaluation, ladite station de triage comprenant encore un éjecteur fonctionnant en réponse au signal de discrimination dudit dispositif d'évaluation pour modifier ou non la trajectoire de la chute des produits.

Les dispositifs décrits dans les documents EP-0 932 456 et EP-0 705 650 sont destinés à éliminer les corps étrangers du flux de produits se présentant sous forme de graines ou de grains secs tels que : grains de café, grains de riz, pois, noisettes, cacahuètes, grains de matière plastique ou produits analogues, en utilisant des systèmes de discrimination basés sur l'analyse de la couleur des produits constituant le flux à trier. Ces dispositifs et systèmes sont totalement inaptes à opérer une séparation qualitative de petits fruits se présentant sous forme de baies à jus et de forme roulante, lesquelles ont un effet tendance à s'agglutiner en raison de la nature collante de leurs jus produits lors de la récolte ou de l'égrappage.

La possibilité d'obtenir une telle séparation qualitative dans le cas particulier des baies à jus, est précisément, un but essentiel de la présente invention.

Selon l'invention, ce résultat est obtenu, grâce à une machine de tri sélectif de récolte de baies, en particulier de vendange égrenée qui peut être composée de baies saines mûres et entières, de baies immatures ou millerandées, de baies trop matures ou botrytisées, de baies écrasées ou éclatées, de feuilles, de rafles ou fragments de rafles, de pétioles, de débris divers et de jus collant, comprenant

- un système d'amenée apte à alimenter un système visionique ;
- un système visionique comprenant :

- un dispositif de vision artificielle permettant d'acquérir des images des composants de la récolte issus du système d'amenée ; et
- un dispositif de traitement apte à analyser ces images pour reconnaître les composants de la récolte et les discriminer en fonction de critères pré-établis ; et

- un système de séparation sélectif des baies saines mûres et entières des autres composants de la récolte, commandé par le dispositif de traitement, le système d'amenée étant agencé pour permettre d'étaler la récolte sur une seule couche, d'aligner, d'isoler individuellement et de déplacer les composants de la récolte, selon un mouvement rectiligne à vitesse régulée, afin de faire défiler individuellement lesdits composants de la récolte au travers du système visionique, ce dernier étant configuré pour individualiser et repérer dans l'espace chaque élément afin de commander le système de séparation sélectif.

Une telle machine est avantageusement adaptée au traitement de baies collantes.

Selon une autre caractéristique de l'invention, les composants de la récolte sont éjectés à la sortie du système d'amenée afin d'être analysés par le système visionique, en vol libre.

Selon une autre caractéristique de l'invention, le plan de l'ensemble des lignes optiques du système visionique est disposé le plus proche possible de l'extrémité aval du système d'amenée.

Ceci permet avantageusement de limiter la dispersion des baies éjectées.

Selon une autre caractéristique de l'invention, le plan de l'ensemble des lignes optiques du système visionique est disposé à une distance de l'extrémité aval du système d'amenée au moins égale au calibre du plus gros objet typique des composants de la récolte.

Selon une autre caractéristique de l'invention, le plan d'action du système de séparation sélectif est disposé à une distance (b) du plan de l'ensemble des lignes optiques du système visionique au moins égale à : $b = X_{obj} + T_r \times V_c$, avec :

- $X_{obj}$ : calibre du plus gros objet typique des composants de la récolte,
- $T_r$ : temps de réponse du système,
- $V_c$ : vitesse du convoyeur d'amenée.

Selon une autre caractéristique de l'invention, le plan de l'ensemble des lignes optiques du système visionique est sensiblement perpendiculaire aux trajectoires moyennes des composants de la récolte issus du système d'amenée.

Selon une autre caractéristique de l'invention, le système d'amenée comprend un convoyeur d'amenée horizontal ou sensiblement horizontal dont la surface supérieure porteuse est agencée pour déplacer les composants de la récolte sous forme d'une pluralité de files séparés et parallèles, en direction de son extrémité aval d'où lesdits composants de la récolte sont éjectés en vol libre. Cette orientation du convoyeur évite que les baies sphériques ou sensiblement sphériques ne puissent rouler vers l'avant ou vers l'arrière par rapport au sens de déplacement du convoyeur.

Selon une autre caractéristique de l'invention, la vitesse régulée du système d'amenée est accordée avec la vitesse d'acquisition du système visionique afin de produire une image la moins déformée possible constituée de pixels sensiblement carrés.

Un tel accord facilite avantageusement le traitement ultérieur des images acquises.

Selon une autre caractéristique de l'invention, la vitesse du convoyeur d'amenée est comprise entre 1,5 et 4 m/s.

Cette caractéristique permet avantageusement d'éjecter efficacement les baies à la sortie du convoyeur.

Selon une autre caractéristique de l'invention, lorsque la vitesse du convoyeur d'amenée est, par exemple, égale à 2,4 m/s, on a un temps d'acquisition du système visionique de 300 $\mu$s, une résolution du système visionique de 1380 pixels et une largeur de la zone d'acquisition du système visionique de 1 m.

Selon une autre caractéristique de l'invention, la longueur utile du convoyeur d'amenée est comprise entre 0,5 et 2,5 m.

Une telle longueur permet avantageusement une bonne immobilisation des composants rebondissants ou roulants de la récolte sur le tapis du convoyeur.

Selon une autre caractéristique de l'invention, le rouleau de sortie du convoyeur d'amenée présente un diamètre le plus petit possible, afin d'éviter un collage des composants de la récolte à la sortie du convoyeur d'amenée.

Selon une autre caractéristique de l'invention, le convoyeur d'amenée est constitué par un convoyeur à cordes s'enroulant sur au moins deux rouleaux à gorges et dont la surface supérieure active est constituée par une pluralité de brins parallèles.

Selon une autre caractéristique de l'invention, les cordes sont tendues à 4daN+/- 10%, avec un allongement correspondant de 1%.

Selon une autre caractéristique de l'invention, les cordes comportent une gaine en polyuréthane rugueux entourant une âme en tresse polyester.

Selon une autre caractéristique de l'invention, les cordes présentent en surface des picots ou des ondulations formant un relief extérieur.

Selon une autre caractéristique de l'invention, l'espace ou pas qui sépare deux brins parallèles adjacents de la surface supérieure active du convoyeur d'amenée est inférieur au diamètre moyen des baies saines et entières, et suffisamment large pour laisser passer le jus ou les corps étrangers de petites dimensions.

Cette caractéristique permet avantageusement un pré tri de certains composants de la récolte.

Selon une autre caractéristique de l'invention, le convoyeur d'amenée comprend encore au moins un troisième rouleau à gorges disposé à distance sous la surface active afin d'éloigner les cordes de ladite surface active et de dégager un volume apte à accueillir un réceptacle pour les composants de la récolte traversant les cordes au niveau de la surface active.

Selon une autre caractéristique de l'invention, le convoyeur d'amenée comprend encore au moins un rouleau à gorges intermédiaire disposé entre les deux rouleaux à gorges et au dessus du plan défini par les deux rouleaux à gorges afin de tendre et de soutenir les cordes au niveau de la surface active.

Selon une autre caractéristique de l'invention, le tapis transporteur du convoyeur d'amenée est constitué par une pluralité d'anneaux de corde indépendants.

Selon une autre caractéristique de l'invention, chaque anneau de corde est bouclé au moyen d'un joint dont la section est incluse dans le diamètre de la corde.

Un tel dispositif permet avantageusement une réalisation d'anneaux sans fin s'enroulant bien sur les rouleaux à gorges.

Selon une autre caractéristique de l'invention, le système d'amenée comprend encore un convoyeur oblique disposé en amont du convoyeur d'amenée et dont la surface active est animée d'un mouvement de bas en haut, dans un sens inverse au mouvement de chute de la récolte déversée sur ledit convoyeur oblique, la surface active dudit convoyeur oblique étant lisse ou munie de tasseaux.

Selon une autre caractéristique de l'invention, la surface active du convoyeur oblique présente une inclinaison réglable comprise entre 45 et 55° par rapport à l'horizontale et une vitesse comprise entre 0,05 et 0,3 m/s.

Selon une autre caractéristique de l'invention, le convoyeur oblique comprend encore un moyen de nettoyage apte à débarrasser ledit convoyeur oblique des composants de la récolte éventuellement collés sur ladite surface active.

Selon une autre caractéristique de l'invention, le système d'amenée comprend encore un bec vibrant, disposé entre le convoyeur oblique et le convoyeur d'amenée.

Selon une autre caractéristique de l'invention, la surface active du bec vibrant comprend un premier plan incliné disposé sous le convoyeur oblique et sensiblement parallèle à celui-ci, et un second plan incliné présentant une inclinaison par rapport à l'horizontale comprise entre 0 et 10°.

Cette caractéristique, associée à la vibration, permet avantageusement un bon étalement de la récolte et rend possible un dépôt en douceur des baies rondes sur le convoyeur d'amenée, évitant un rétro roulage desdites baies.

Selon une autre caractéristique de l'invention le système d'amenée comporte au moins un dispositif de séparation et de récupération du jus, des autres composants de la récolte.

Selon une autre caractéristique de l'invention, le système visionique comprend un dispositif de vision artificielle constitué par un dispositif d'acquisition d'images (lignes de points ou matrice de points), par exemple, une ou plusieurs caméras lignes ou une ou plusieurs caméras matricielles, permettant d'enregistrer l'image des baies et corps étrangers à trier, dans leur mouvement, et un moyen d'éclairage permettant d'éclairer les composants de la récolte durant l'acquisition d'image, consistant en un projecteur constitué par un ou plusieurs halogènes de large spectre lumineux, focalisé ou non, ou en un projecteur à leds blanches ou à leds RVB (rouge, vert, bleu), ou en un système à balayage laser, ou en une autre source de lumière de longueur d'ondes lumineuses particulièrement pertinentes pour déterminer un critère de discrimination, placé dans le même plan que l'ensemble des lignes optiques du dispositif de vision artificielle.

Selon une autre caractéristique de l'invention, le système visionique comprend encore un fond de contraste disposé en arrière plan des composants de la récolte et orienté perpendiculairement à l'axe optique du dispositif de vision artificielle.

Selon une autre caractéristique de l'invention, le fond de contraste est constitué par un cylindre rotatif, tournant à grande vitesse afin d'éjecter le jus ou d'autres composants de la récolte éventuellement collés sur sa surface.

Selon une autre caractéristique de l'invention, le fond de contraste présente une couleur absente ou peu présente dans la couleur des baies traitées des différents types de récolte.

La rotation du fond de contraste cylindrique présente le double avantage de réaliser un nettoyage dudit fond de contraste et de limiter ainsi, dans l'image acquise, la durée de présence d'une éventuelle salissure résiduelle, et donc le risque de confusion de celle-ci avec un composant de la récolte.

Selon une autre caractéristique de l'invention, le système de séparation sélectif des baies saines mûres et entières des autres composants de la récolte, est constitué par au moins une rampe de buses pneumatiques, de préférence commandées par des électrovannes ultra-rapides et dont le nombre correspond au nombre d'alignements parallèles des baies de la récolte sur la surface supérieure active du convoyeur d'amenée, chacune desdites buses pneumatiques étant placée dans un plan vertical passant par le milieu d'un alignement de baies.

Selon une autre caractéristique de l'invention, la machine de tri comporte au moins deux rampes de buses pneumatiques superposées.

Selon une autre caractéristique de l'invention, les buses pneumatiques sont alignées avec les lignes optiques du dispositif de vision artificielle, pour rattrapage de défaut de parallaxe.

Selon une autre caractéristique de l'invention, le système visionique est organisé sous forme d'un ensemble compact ou caisson abritant le dispositif d'acquisition d'images et le système d'éclairage, ce caisson étant muni, d'une part, d'un volet de fermeture permettant de protéger le système visionique, ce volet de fermeture se fermant automatiquement lors de la mise hors tension dudit système, et, d'autre part, d'un ventilateur ou d'une source d'air comprimé permettant de mettre ledit caisson en surpression afin de créer un courant d'air sortant au niveau dudit volet de fermeture.

Ceci présente l'avantage de protéger les équipements optiques et/ou d'éclairage contre d'éventuelles projections issues de la vendange.

L'invention concerne encore une chaîne de tri comportant une machine de tri selon l'un des modes de réalisation précédents, pouvant être réalisée sous forme d'installation mobile automotrice ou tractée, ou sous forme d'installation travaillant à poste fixe.

Selon une autre caractéristique de l'invention, la chaîne de tri comporte un moyen de déversement de la récolte à trier sur la partie amont du système d'amené commandé par la machine de tri afin d'ajuster le débit de déversement au débit de la machine de tri.

Les buts, caractéristiques et avantages ci-dessus, et d'autres encore, ressortiront mieux de la description qui suit et des dessins annexés dans lesquels :

La figure 1 est une vue générale, à caractère schématique, illustrant un exemple de configuration de chaîne de tri selon l'invention comprenant une machine de tri selon l'invention et montrée en cours de fonctionnement.

La figure 2 est une vue en perspective, avec détail écorché, d'un convoyeur oblique selon l'invention.

La figure 3 est une vue en perspective, d'un bec vibrant selon l'invention.

La figure 4 est une vue en perspective, d'un convoyeur d'amenée selon l'invention.

La figure 5 est une vue de détail en perspective, avec écorché, d'un joint de cardan miniature avantageusement utilisé pour boucler le ou les anneaux de corde du convoyeur d'amenée.

La figure 6 est une vue de détail en perspective d'un mode de réalisation alternatif d'une corde.

Les figures 7 et 8 sont deux vues à caractère schématique de l'interface entre le système d'amenée, le système visionique et le système de séparation sélectif.

La figure 9 est une vue en perspective écorchée du caisson visionique.

La figure 10 est une vue de détail de face et à échelle agrandie, montrant le guidage latéral des baies dans les couloirs mobiles du convoyeur d'amenée.

La figure 11 est une vue de détail illustrant l'alignement des buses pneumatiques avec les couloirs mobiles du convoyeur d'amenée.

Les figures 12, 13 et 14 sont des vues à caractère schématique illustrant, à titre d'exemples, différentes configurations de chaînes de tri utilisant la machine de tri selon l'invention.

On se réfère auxdits dessins pour décrire des exemples intéressants, quoique nullement limitatifs, de réalisation de la machine de tri et de la chaîne de tri selon l'invention.

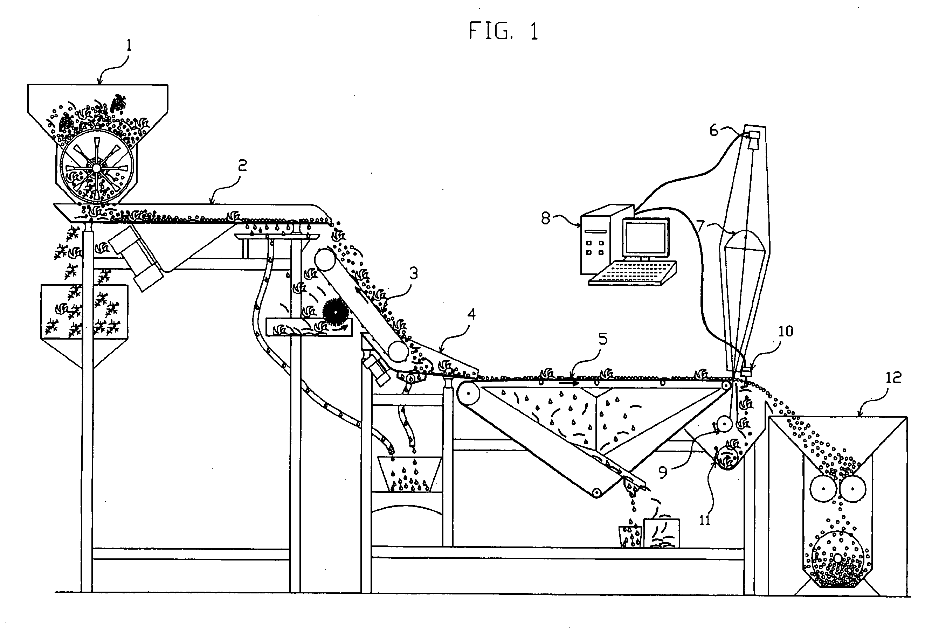

Sur la figure 1, est représentée une installation ou chaîne de tri comprenant une machine de tri selon l'invention. En référence à cette figure, la machine de tri sélectif est adaptée à trier une récolte de baies, en particulier une vendange égrenée. Cette vendange peut être composée de baies saines, mûres et entières, de baies immatures ou millerandées, de baies trop matures ou botrytisées, de baies écrasées ou éclatées, de feuilles, de rafles ou fragment de rafles, de pétioles, de débris divers et de jus collant. Cette machine de tri comprend un système d'amenée 3, 4, 5, un système visionique 6, 7, 8, 9, et un système de séparation sélectif 10 des baies saines mûres et entières des autres composants de la récolte. Le système d'amenée est apte à alimenter le système visionique. Le système visionique comprend un dispositif de vision artificielle 6 permettant d'acquérir des images des composants de la récolte issus du système d'amenée et un dispositif de traitement 8 apte à analyser ces images pour reconnaître les composants de la récolte et les discriminer en fonction de critères pré-établis, en commandant le système de séparation sélectif 10.

Le système d'amenée est agencé pour permettre d'étaler la récolte sur une seule couche, d'aligner, d'isoler individuellement, et de déplacer les composants de la récolte, selon un mouvement rectiligne à vitesse régulée, afin de faire défiler individuellement lesdits composants de la récolte au travers du système visionique.

Le système visionique est configuré pour individualiser et repérer dans l'espace chaque élément afin de commander le système de séparation sélectif 10.

Le système d'amenée 3, 4, 5 est alimenté par la récolte, de préférence égrappée par un érafloir 1, connu en soi. L'érafloir 1, peut être constitué par différents types d'égrappoirs ou d'égreneurs connus en soi. Sur la figure 1 est représenté un érafloir 1 à cage cylindrique ajourée rotative, à l'intérieur de laquelle est logé un hérisson tournant comprenant des tiges disposées en hélice sur un arbre rotatif, cet érafloir 1 est équipé d'une trémie d'approvisionnement, dans laquelle est déversée la vendange brute.

L'érafloir 1 est, de préférence, installé au début de la chaîne de tri, mais il peut être disposé à d'autres emplacements de ladite chaîne, en amont de la machine de tri. Il peut être embarqué sur la machine de récolte, ou sur les engins assurant le transport de la récolte jusqu'au lieu de traitement de celle-ci.

Le système d'amenée peut être directement alimenté par l'érafloir 1. Il est aussi possible d'intercaler, de manière optionnelle, différents types de convoyeurs tel qu'un convoyeur vibrant 2 représenté sur la figure 1, entre l'érafloir 1 et le système d'amenée 3, 4, 5.

Le système d'amenée 3, 4, 5 prépare la récolte afin de faciliter son analyse par le système visionique 6, 7, 8, 9. Le système d'amenée collabore de manière étroite avec le système visionique afin d'optimiser le tri de la récolte.

Selon un mode d'exécution préféré et avantageux de l'invention, le système d'amenée est tel que les composants de la récolte sont éjectés à la sortie ou extrémité aval dudit système d'amenée, dans le sens de cheminement de la récolte, soit de gauche à droite sur la figure 1. Les composants de la récolte quittent ainsi le système d'amenée en direction de la zone d'analyse du système visionique 6, 7, 8, 9 en vol libre. L'analyse en vol libre permet premièrement d'améliorer la séparation des composants de la récolte. De plus, optiquement, l'analyse en vol libre permet d'obtenir un fond plus tranché augmentant le contraste entre les composants de la récolte et ledit fond, plus éloigné.

Avantageusement, le système visionique est disposé relativement au système d'amenée, de telle manière que le plan de l'ensemble des lignes optiques du système visionique 6, 7, 8, 9, soit sensiblement perpendiculaire aux trajectoires moyennes des composants de la récolte issus du système d'amenée 3, 4, 5. Une telle disposition permet un défilement optimal des composants de la récolte et ainsi une bonne analyse par le système visionique.

De fait de la spécificité de la récolte, à savoir qu'elle contient un jus sucré qui rend collant les différents composants de cette dernière, un collage variable de ces composants est possible en sortie du système d'amenée. Une variation de ce collage entraîne une variation de la position, de la vitesse ou de l'angle d'éjection des composants, qui occasionne une dispersion des trajectoires de sortie. Ainsi la trajectoire idéale parabolique telle que représentée à la figure 1 en sortie du convoyeur 5 du système d'amenée, est en réalité un faisceau de trajectoires s'écartant de plus en plus à mesure que l'on s'éloigne du système d'amenée. Ceci est préjudiciable à l'analyse visionique qui fonctionne mieux avec une profondeur de champ réduite.

Aussi le plan de l'ensemble des lignes optiques du système visionique 6, 7, 8, 9 est avantageusement disposé le plus proche possible de l'extrémité aval du système d'amenée 3, 4, 5, là où ladite dispersion est la plus réduite.

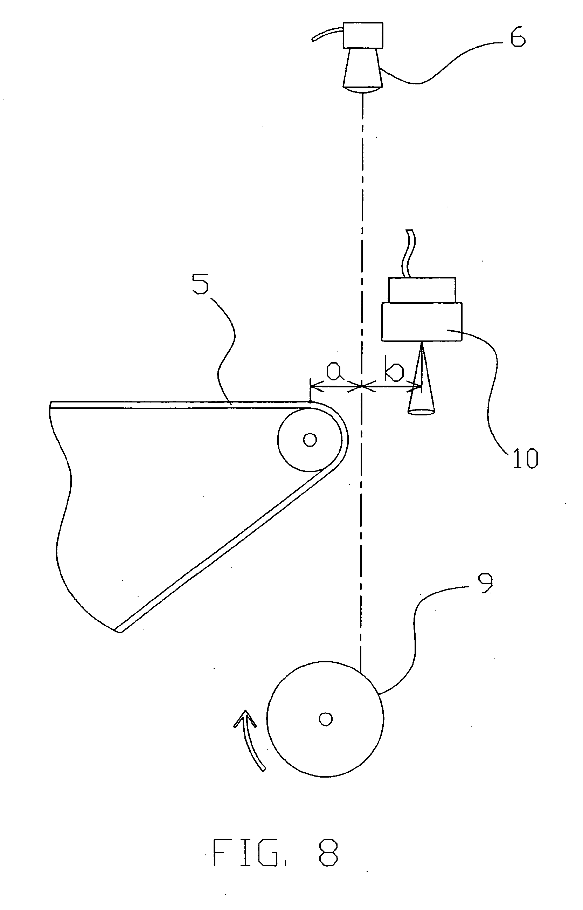

Selon un mode de réalisation préférentiel, plus particulièrement illustré à la figure 8, le plan de l'ensemble des lignes optiques du système visionique 6, 7, 8, 9 est disposé à une distance (a) de l'extrémité aval du système d'amenée 3, 4, 5 au moins égale au calibre Xobj du plus gros objet typique des composants de la récolte. L'extrémité aval est considérée au point de départ de la trajectoire en vol libre des composants de la récolte, à savoir le point où lesdits composants quittent le système d'amenée 3, 4, 5. Ainsi le système visionique 6, 7, 8, 9 est assuré de voir même le plus gros objet typique, en vol libre.

La distance (a) est de préférence faible, afin de limiter les effets de la dispersion des trajectoires, mais au moins égale à Xobj.

De manière comparable, selon un mode de réalisation préférentiel, plus particulièrement illustré à la figure 8, afin d'avoir le temps de traiter l'image acquise pour déterminer s'il convient ou non d'éjecter un composant indésirable de la récolte, le plan d'action du système de séparation sélectif 10 est disposé à une distance b du plan de l'ensemble des lignes optiques du système visionique 6, 7, 8, 9 au moins égale à : b = Xobj + Tr x Vc, avec :

- Xobj : calibre du plus gros objet typique des composants de la récolte,

- Tr : temps de réponse du système, et

- Vc : vitesse du système d'amenée.

La distance b est de préférence faible, avec une valeur minimale afin de tenir compte du temps nécessaire au traitement et garantir ainsi la pertinence de la séparation.

En se référant aux figures 1 (vue d'ensemble) et 4 (vue de détail), un composant essentiel du système d'amenée est un convoyeur d'amenée 5, horizontal ou sensiblement horizontal dont la surface supérieure porteuse 5c est agencée pour déplacer les composants de la récolte. Cette partie sensiblement horizontale ou table, reçoit la vendange égrappée. On comprend que le flux de composants, comprenant des baies, se trouve déversé, sur la portion amont (à gauche des figures) du convoyeur d'amenée 5, dans le sens de cheminement de la récolte, et est déplacé jusqu'à l'extrémité aval pour y être éjecté. Un premier étalement longitudinal de la récolte est obtenu par le mouvement d'avancement du convoyeur.

Selon une caractéristique avantageuse, la vitesse régulée du système d'amenée 3, 4, 5 est accordée avec la vitesse d'acquisition du système visionique 6, 7, 8, 9 afin que la vitesse des composants de la récolte, lorsqu'ils quittent le système d'amenée, soit en rapport avec la vitesse d'acquisition ou de balayage du système visionique. La vitesse des composants de la récolte, et la vitesse de balayage du système visionique sont orthogonales et contribuent à former une image. Si ces deux vitesses sont en rapport, c'est-à-dire sensiblement égales, l'image formée ne subit pas une déformation trop importante et l'on obtient une image aux proportions conservées, ce que l'homme du métier appelle encore des pixels carrés. S'il est possible de réaliser le traitement d'image avec des pixels rectangles, les pixels carrés apportent avantageusement une simplification du traitement d'image.

La vitesse régulée du système d'amenée 3, 4, 5 est accordée avec la vitesse d'acquisition du système visionique 6, 7, 8, 9 afin de produire une image constituée de pixels carrés lorsque Vc = Va = (Lc / Np) x (1 / Tacq), avec :

- Vc : vitesse du système d'amenée,

- Va : vitesse d'acquisition du système visionique pour un pixel,

- Lc : largeur de la zone d'acquisition du système visionique,

- Tacq : temps d'acquisition du système visionique par ligne,

- Np : résolution du système visionique, en nombre de pixels par ligne.

La surface porteuse 5c est organisée sous forme d'une pluralité de files séparées et parallèles. Ainsi les baies sont réparties en une pluralité de files ou alignements parallèles. Ceci contribue à réaliser un second étalement transverse de la récolte. On obtient, de la sorte, un avancement suivant un mouvement rectiligne uniforme des baies et corps étrangers. Ils ne se croisent pas et se déplacent tous à la même vitesse. L'acheminement des baies et autres petits débris sous forme de files séparées, jusqu'à leur point de chute, permet de ménager un espace entre les composants du flux déversés à l'extrémité de sortie du convoyeur 5 et, ainsi, de les visionner individuellement. Il est ainsi recherché la suppression des agglomérats de composants collés entre eux et plus difficiles à traiter par le système visionique.

La vitesse d'avancement longitudinal du tapis du convoyeur d'amenée 5 a une double fonction. Une première fonction est l'étalement longitudinal de la récolte afin d'en séparer les composants. Pour un étalement donné, il est possible de régler soit la vitesse, soit le flux de vendange déversée. Une seconde fonction de la vitesse est l'éjection des composants de la vendange à l'extrémité aval du convoyeur d'amenée 5. Pour être sûr de décoller les baies collantes et les éjecter vers le système visionique, il convient de transmettre à ces baies, au moyen du convoyeur 5, une vitesse initiale au moins égale à 1,5 m/s, cette vitesse pouvant être comprise entre 1,5 m/s et 4 m/s. Une augmentation de cette vitesse permet d'augmenter la cadence de traitement de la vendange, mais reste cependant limitée par les capacités d'acquisition et de traitement d'image du système visionique.

Au-delà de 4 m/s le système visionique ne peut suivre la cadence avec des technologies économiques.

Il a été indiqué précédemment que la vitesse d'amenée Vc, qui correspond à la vitesse Vc du convoyeur 5, est avantageusement corrélée avec la vitesse d'acquisition du système visionique, afin d'obtenir des pixels carrés. Pour un temps d'acquisition d'image de Tacq = 300µs, une résolution du système visionique de Np = 1360 pixels et une largeur de la zone d'acquisition du système visionique, qui se confond ici avec une largeur du convoyeur, Lc = 1m, une vitesse du convoyeur d'amenée 5 égale à Vc = 2,4 m/s permet d'obtenir des pixels carrés, tout en garantissant une bonne éjection des baies.

On verra, par la suite, que le convoyeur d'amenée 5 peut être alimenté par différents dispositifs. Dans tous les cas, la récolte est déversée sur la surface porteuse ou surface active 5c. Ce déversement peut créer des mouvements de roulage ou rétro-roulage des baies sphériques, ainsi que des mouvements de rebond verticaux du fait de l'élasticité de la surface porteuse 5c et/ou des baies. Afin de supprimer ou de laisser une possibilité d'amortissement de ces mouvements parasites des composants de la récolte, il convient de disposer d'une certaine longueur utile de surface porteuse 5c du convoyeur d'amenée 5, cette longueur étant, de préférence, comprise entre 0,5 m et 2,5 m. Une longueur minimale de 0,5 m a ainsi été expérimentée. Une valeur préférentielle de 1,5 m au delà de laquelle les baies sont en majorité stabilisées est retenue. Une longueur de la surface porteuse 5c supérieure à 2,5 m n'apporte rien, en augmentant inutilement l'encombrement de la machine ou de la chaîne de tri incorporant une telle machine.

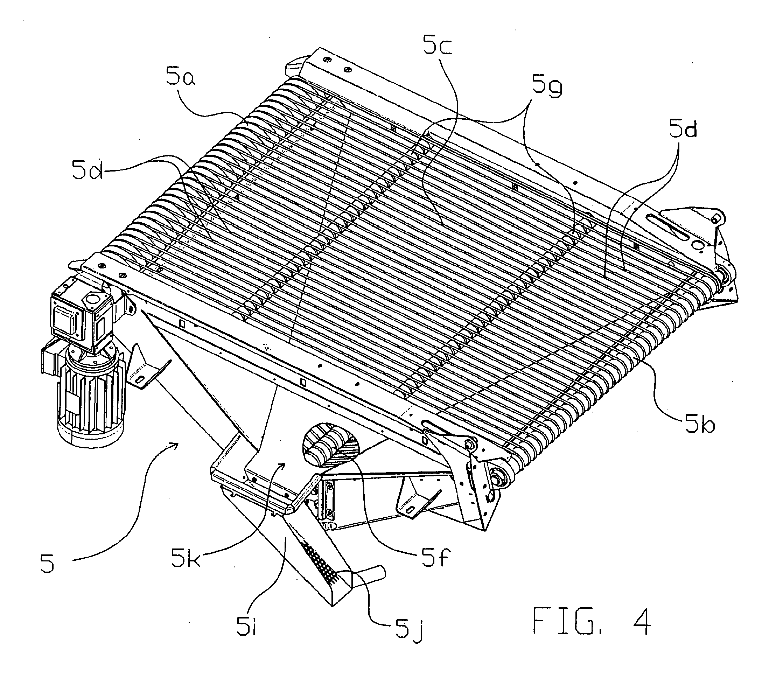

En se référant à la figure 4, le convoyeur 5 présente un tapis de transport formant une surface porteuse 5c. Ce tapis est enroulé autour d'un rouleau amont 5a, et d'un rouleau aval 5b et emporte la récolte de gauche à droite. Les composants de la récolte sont éjectés au niveau du rouleau aval 5b. Afin de limiter les risques de collage au niveau de l'extrémité de sortie du convoyeur d'amenée 5, lors de l'éjection, le rouleau aval 5b présente un diamètre le plus petit possible. Il est préférable que le rayon de ce rouleau reste inférieur au calibre Xobj du plus gros objet type des composants de la récolte. Cependant, la tenue mécanique de ce rouleau, notamment pour supporter la tension du tapis, nécessite un diamètre minimum. Un diamètre de 30 mm est apte à remplir cette condition. Un diamètre de 60 mm garantit encore une éjection satisfaisante. Afin de répondre à cette contrainte de diamètre réduit du rouleau aval 5b, le rouleau moteur est avantageusement le rouleau amont 5a.

Toujours en référence à la figure 4, selon un mode de réalisation particulièrement avantageux, le convoyeur d'amenée 5 est constitué par un convoyeur à cordes s'enroulant sur au moins deux rouleaux à gorges 5a, 5b et dont la surface supérieure active 5c ou surface porteuse est constituée par une pluralité de brins parallèles 5d.

L'utilisation de cordes, en limitant les surfaces de contact avec les baies, permet de réduire les effets de l'adhérence des baies collantes, durant leur transport et surtout lors de leur éjection au niveau du rouleau aval 5b. Les cordes participent encore à la fonction d'étalement transverse et de guidage en files parallèles. Enfin, les cordes réalisent un tapis à claire-voie permettant aux petits débris et au jus de tomber entre les cordes. Chaque brin 5d constitue, avec un brin voisin, un couloir mobile 5e, de sorte que la surface supérieure active 5c est constituée par une pluralité de couloirs mobiles parallèles 5e, et que les baies étalées sur ladite surface supérieure active se déplacent sous forme d'alignements parallèles.

Les cordes sont avantageusement tendues à 4 daN +/- 10%, avec un allongement correspondant de 1%. Cette tension peut avantageusement être réalisée par un dispositif de tension automatique, par exemple par l'intermédiaire d'un tendeur, d'un ressort, d'un vérin pneumatique régulé en pression ou par tout autre dispositif élastique.

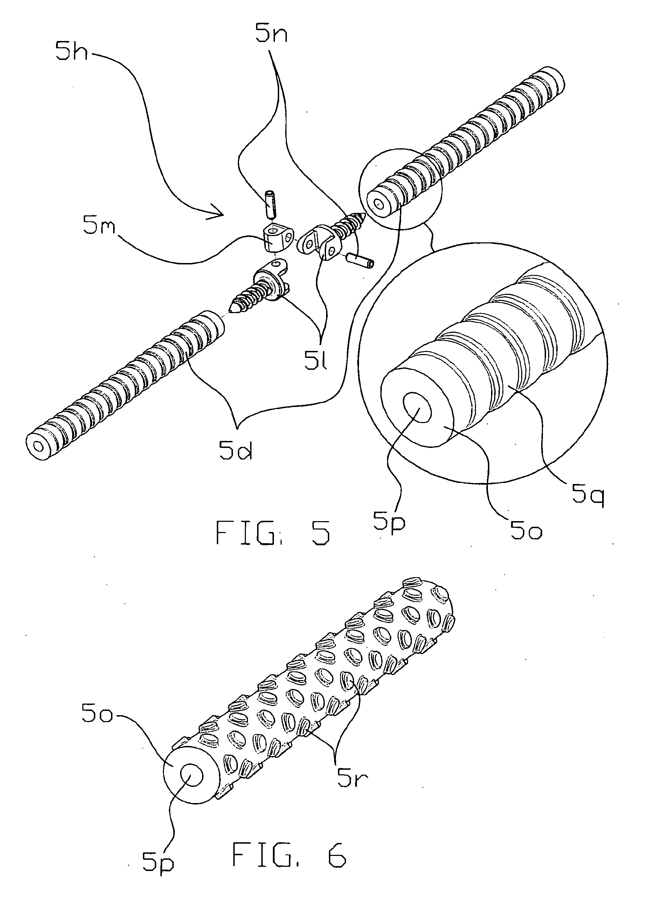

En se référant à la figure 5, afin de bien entraîner les baies qui reposent entre deux brins 5d parallèles, la corde est avantageusement rugueuse. Une composition avantageuse comporte une gaine 5o en polyuréthane rugueux. Afin de solidité en tension, l'âme 5p de la corde est avantageusement réalisée en tresse polyester.

Selon un mode de réalisation préférentiel, illustré aux figures 5 et 6, les cordes 5d présentent avantageusement en surface des picots 5r (figure 6) ou des ondulations 5q (figure 5) formant un relief extérieur. Ceci permet d'entraîner plus facilement les composants de la récolte. Ceci permet encore de réduire le rétro-roulage des baies et donc les agglomérats des composants. En effet, les baies rondes, en rétro-roulant, viennent se plaquer contre les composants plus collants qui se mettent rapidement à la vitesse du convoyeur. Une telle rugosité des cordes 5d, améliorant l'efficacité des différentes fonctions du convoyeur d'amenée 5, en permettant avantageusement d'en réduire la longueur.

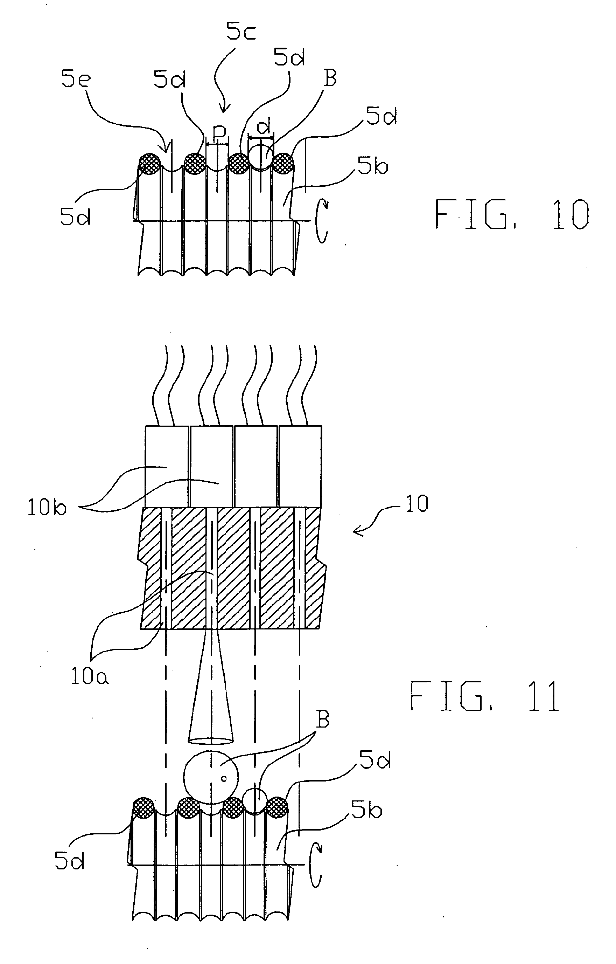

En se référant à la figure 10, figurant une coupe des cordes au niveau d'un rouleau 5a, 5b, l'espace ou pas p qui sépare deux brins parallèles voisins 5d de la surface supérieure active 5c du convoyeur d'amenée 5, est inférieur au diamètre moyen d des baies B saines et entières. D'autre part, l'espace ou pas p est suffisamment large pour laisser passer le jus et/ou les corps étrangers que pourrait encore inclure le flux de baies transportées par ledit convoyeur d'amenée 5.

Selon un mode de réalisation avantageux, illustré aux figures 1 et 4, le convoyeur d'amenée 5 comprend encore au moins un troisième rouleau à gorges 5f en plus des deux rouleaux 5a, 5b. Ce rouleau 5f est disposé à distance sous la surface active 5c afin d'éloigner les cordes de ladite surface active 5c, par exemple en forme de triangle. Ceci permet de dégager un volume apte à accueillir un réceptacle 5k ou un dispositif 5i, 5j, 5k récupérant les composants de la récolte (débris, jus) traversant les cordes au niveau de la surface active 5c.

Selon un mode de réalisation avantageux, le convoyeur d'amenée 5 comprend encore au moins un rouleau à gorges intermédiaire 5g disposé entre les deux rouleaux à gorges 5a, 5b. Ce rouleau est disposé sous les brins 5d et légèrement au dessus du plan défini par les deux rouleaux à gorges 5a, 5b afin de tendre et de soutenir lesdits brins 5d de corde au niveau de la surface active 5c. Ceci permet localement de tendre les cordes afin d'éviter ou de limiter un rebond des baies.

Selon un premier mode de réalisation (non illustré), le tapis transporteur du convoyeur 5 est constitué par une unique corde sans fin enroulée autour de la paire de rouleaux à gorges 5a, 5b, les extrémités opposées de cet enroulement se trouvant raccordées par une portion de corde circulant diagonalement au-dessous de la portion de retour dudit tapis transporteur. Cette portion de retour peut être utilisée pour réaliser la tension constante de l'ensemble des brins 5d du tapis transporteur 5. Cette disposition facilite le montage du convoyeur et le nettoyage du tapis transporteur. Elle permet également d'obtenir une tension identique pour tous les brins porteurs 5d du tapis transporteur.

Selon un second mode de réalisation préférentiel, le tapis transporteur du convoyeur d'amenée 5 est constitué par une pluralité d'anneaux de corde indépendants. Ces anneaux présentent sensiblement la même longueur et sont tendus simultanément, par exemple au moyen d'un rouleau tendeur.

Selon une caractéristique particulièrement avantageuse, illustrée en référence à la figure 5, la boucle unique de corde dans le cas du premier mode de réalisation, ou chaque anneau de corde dans le cas du second mode de réalisation, est bouclé au moyen d'un joint 5h dont la section est incluse dans le diamètre de la corde. De manière intéressante, ce joint 5h peut être démontable. Il peut être, par exemple, constitué par un joint de cardan miniature. Ce joint de cardan 5h est tel que sur toute sa longueur, sa section reste dans le prolongement du brin 5d et incluse dans le cylindre défini par le diamètre dudit brin 5d. Ce joint de cardan 5h comprend deux chapes 5l assemblées au moyen de goupilles 5n via une noix 5m. Lesdites chapes 5l sont prolongées par des vis. Ces vis sont vissées dans l'âme 5p du brin 5d. La tresse de polyester permet un tel vissage. Un tel montage avec un joint de cardan 5h, ou autre joint démontable dont la section est incluse dans le diamètre de la corde, permet avantageusement aux brins de s'enrouler sur les gorges des rouleaux 5a, 5b, 5f, 5g quelle que soit l'orientation angulaire du brin 5d autour de son axe.

La machine de tri selon l'invention peut fonctionner avec un système d'amenée comportant uniquement un convoyeur d'amenée 5. Dans ce cas la récolte égrappée est directement déversée sur le convoyeur 5, par exemple directement par l'érafloir 1 ou via un moyen intermédiaire 2.

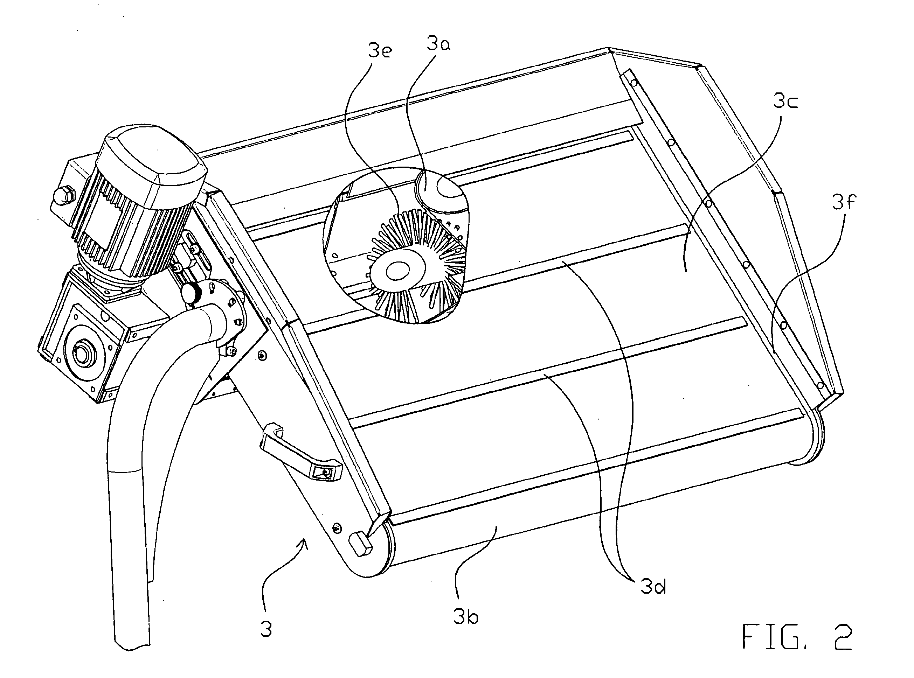

Selon une configuration avantageuse, le système d'amenée comprend encore un convoyeur oblique 3. Ce convoyeur oblique 3, comme illustré à la figure 1, est disposé en amont du convoyeur d'amenée 5, reçoit le déversement de la récolte et la délivre ensuite directement au convoyeur d'amenée 5. Le convoyeur oblique 3, illustré en détail à la figure 2, possède une surface active 3c animée d'un mouvement de bas en haut, dans un sens qui s'oppose au mouvement de chute de la récolte, lors de son déversement sur la surface active 3c dudit convoyeur oblique 3. Ce mouvement inverse, permet de réduire la vitesse des composants de la récolte, qui arrive ensuite sur le convoyeur d'amenée 5 avec un mouvement plus faible, évitant ou réduisant les éventuels rebonds, roulages ou rétro-roulages des baies.

Le convoyeur oblique 3 constitue un dispositif permettant de réguler le débit du flux de produits récoltés et d'étaler ce flux sur une largeur correspondant à la largeur du convoyeur d'amenée 5.

Selon une disposition très intéressante de l'invention, le convoyeur oblique 3 incliné permet aussi d'éliminer un pourcentage conséquent des débris longs et fins (pétioles, fragments de feuilles et de rafles, brindilles) restant mêlés aux baies après passage de la récolte dans l'érafloir 1. Le convoyeur oblique 3 contribue aussi à l'étalement régulier de la vendange sur une seule couche, sur la surface horizontale active 5c du convoyeur d'amenée 5. Comme représenté sur les figures 1 et 2, il est disposé avec une inclinaison comprise entre 45 et 55°, avec une inclinaison préférentielle de 45°. Ainsi la partie haute se trouve disposée sous le déchargement, du moyen 2 ou de l'érafloir 1, tandis que son extrémité basse est placée au-dessus de la portion amont 5a du convoyeur d'amenée 5.

Pour assurer ses différentes fonctions, le convoyeur oblique évolue à une vitesse faible relativement à celle du convoyeur d'amenée 5, avantageusement comprise entre 0,05 et 0,3 m/s, avec une valeur préférentielle de 0,15 m/s.

L'inclinaison et/ou la vitesse sont avantageusement réglables en fonction de la nature, de la forme et de la qualité de la récolte à traiter.

En se référant à la figure 2, le convoyeur oblique 3 est constitué par une bande sans fin s'enroulant sur au moins deux rouleaux 3a, 3b dont l'un, ici 3a, est entraîné par un moteur, dans un sens suivant lequel le brin actif constituant la surface active 3c de la bande se déplace lentement de bas en haut, c'est à dire dans un sens inverse au sens de déversement de la récolte.

La surface extérieure de la bande peut être lisse ou munie de tasseaux 3d disposés de sorte à constituer une succession de lignes continues ou brisées. En cours de fonctionnement, les débris longs et fins ont tendance à s'aligner et à se caler contre les tasseaux 3d disposés sur la portion ascendante du tapis, de sorte qu'ils se trouvent remontés en direction de l'extrémité haute du tapis et évacués de ce dernier lorsqu'ils franchissent ladite extrémité, tandis que les baies B roulent sur la surface inclinée dudit tapis, et se déversent sur la partie amont du convoyeur d'amenée 5.

Selon le type de baies plus ou moins collantes et juteuses, et suivant la grosseur de celles-ci, la surface externe active de la bande sans fin 7c peut être lisse ou équipée de tasseaux plus ou moins hauts (de l'ordre de 2 à 4 mm) et de forme adaptée à la forme desdites baies et laissant passer le jus éventuel. Un dispositif de récupération de jus peut avantageusement être disposé au niveau du rouleau bas 3b.

Avantageusement un moyen de nettoyage 3e est placé transversalement sous le tapis, contre la portion ou brin de retour de la bande sans fin, pour assurer le nettoyage de cette dernière. Ce moyen 3e est par exemple une brosse hélicoïdale 3e sensiblement parallèle aux rouleaux 3a, 3b, tournant à grande vitesse pour se nettoyer par effet centrifuge.

La largeur du convoyeur oblique 3 correspond sensiblement à celle du convoyeur d'amenée 5.

L'interface entre le convoyeur oblique 3 et le convoyeur d'amenée 5 peut s'opérer directement ou par l'intermédiaire d'un bec verseur vibrant orientable 4. Le système d'amenée comprend avantageusement un bec vibrant 4, disposé entre le convoyeur oblique 3 et le convoyeur d'amenée 5.

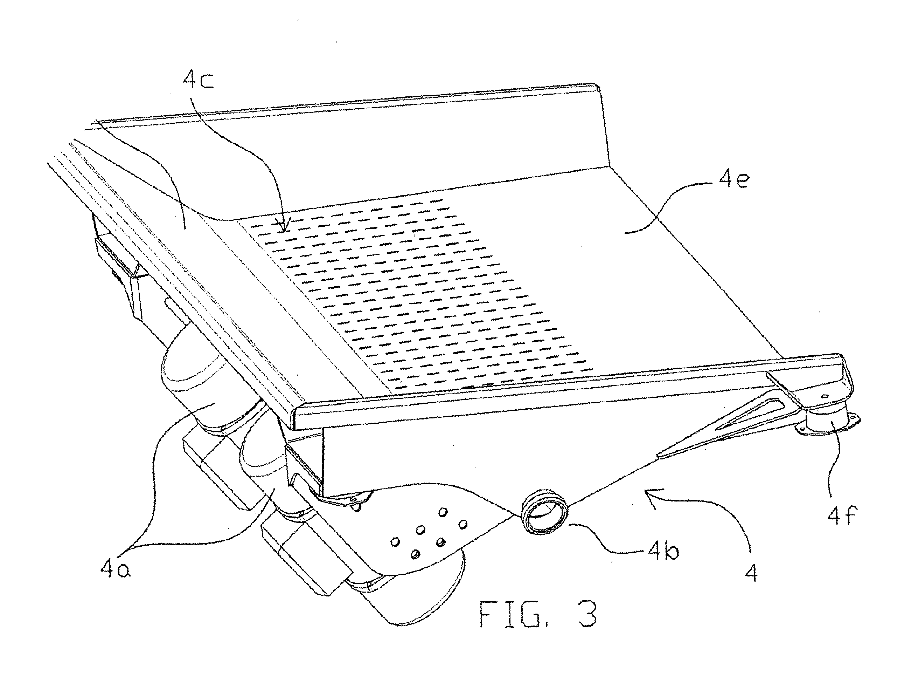

Comme illustré à la figure 3, un tel bec vibrant 4 comprend une surface active 4c comprenant un premier plan incliné 4d et un second plan incliné 4e. Le premier plan incliné est avantageusement disposé sous le convoyeur oblique 3 et présente une orientation sensiblement identique à celle du convoyeur oblique 3. Le second plan incliné 4e présente une inclinaison par rapport à l'horizontale comprise entre 0 et 10°.

La vibration du bec vibrant 4 a pour fonction de faire avancer le flux de vendange sur le second plan incliné. De plus elle permet d'homogénéiser la répartition de la vendange et permet de désagréger les agglomérats de composants collés. L'ensemble du bec vibrant 4 est monté sur des supports élastiques 4f pour permettre le mouvement de vibration engendré par le vibreur 4a autour de l'arbre 4b.

L'inclinaison du second plan incliné permet avantageusement de stabiliser les baies avant leur transfert au convoyeur d'amenée 5, permettant ainsi de réduire fortement le roulage ou le rétro-roulages des baies, lors de leur arrivée sur la surface supérieure active 5c du convoyeur d'amenée 5. Cette inclinaison est avantageusement réglable en fonction de la qualité de la vendange (diamètre des baies, degré de "collage", ...).

La largeur du bec vibrant 4 correspond sensiblement à celles du convoyeur oblique 3 et du convoyeur d'amenée 5.

Selon une configuration particulière, il est possible de déverser la récolte directement sur le plan incliné 4d du bec vibrant 4 à l'aide d'une remorque de transport à bec vibrant permettant de répartir latéralement la vendange. Dans ce cas, le système d'égrenage doit être embarqué sur la machine de récolte.

Le système d'amenée comporte, comme illustré à la figure 1, au moins un dispositif de séparation et de récupération du jus, des autres composants de la récolte. Ce dispositif peut être disposé dans ou sous la surface active 5c du convoyeur d'amenée 5, et/ou au niveau du bec vibrant 4 qui est avantageusement perforé pour agir comme filtre à jus, et/ou encore au niveau du convoyeur oblique 3.

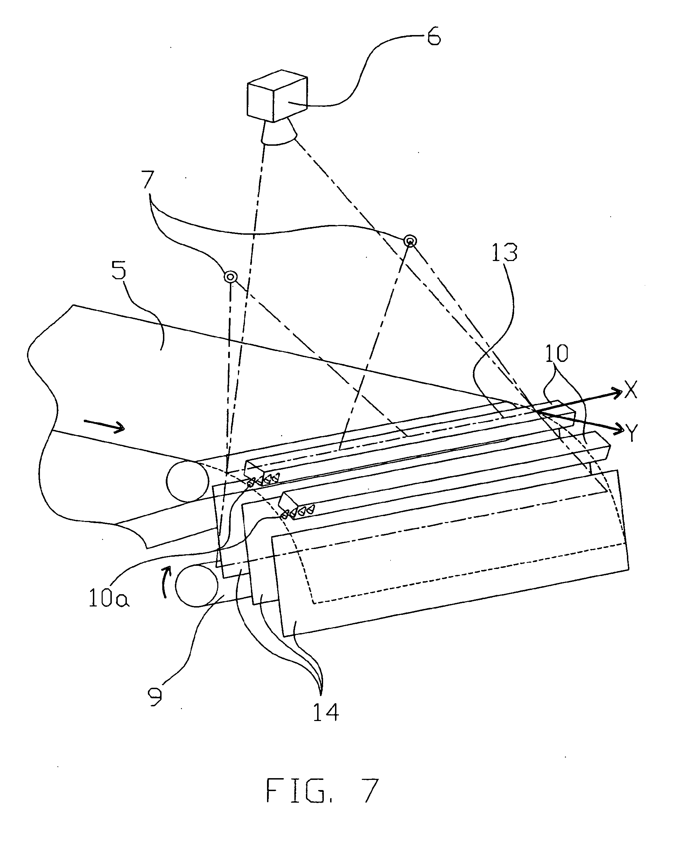

Comme illustré schématiquement à la figure 7, le système visionique comprend au moins un dispositif de vision artificielle 6 constitué par un dispositif d'acquisition d'images, par exemple un capteur ou une caméra permettant d'enregistrer l'image des baies et corps étrangers à trier, dans leur mouvement. Le dispositif de vision artificielle 6 réalisant l'acquisition des images peut être constitué par une ou plusieurs caméras lignes ou par une ou plusieurs caméras matricielles, ou par tout autre capteur d'images approprié. Le système visionique permet de voir individuellement les composants de la récolte en mouvement notamment, selon l'exemple avantageux illustré, durant leur vol libre en sortie du système d'amenée.

La figure 7 illustre une caméra ligne qui acquiert régulièrement une image/ligne à la sortie du convoyeur d'amenée 5, le long de la ligne imaginaire 13. Les composants de la récolte sont vus non loin de l'extrémité aval du convoyeur 5, ainsi les trajectoires en vol libre dont la moyenne est représentée en pointillés, n'ont pas encore eu le temps de s'infléchir ou de trop se disperser. La succession d'images/lignes régulièrement acquise dans le temps permet de reconstituer une image complète. Cette image est à pixels carrés si la vitesse d'arrivée des composants de la récolte est accordée avec la fréquence d'acquisition d'image/ligne.

Le système visionique comprend encore avantageusement un moyen d'éclairage 7 permettant d'éclairer les composants de la récolte durant l'acquisition de leur image. Ce moyen d'éclairage 7 peut consister en un projecteur constitué par un ou plusieurs halogènes de large spectre lumineux, focalisé ou non, en un projecteur à leds blanches ou à leds RVB (rouge, vert, bleu), en un système à balayage laser, ou en une autre source de lumière de longueur d'onde lumineuse particulièrement pertinente pour déterminer un critère de discrimination. Le moyen d'éclairage 7, préférentiellement focalisé, est avantageusement placé dans le même plan que l'ensemble des lignes optiques du dispositif de vision artificielle 6. Ceci permet d'éviter l'effet lune.

Selon un autre mode de réalisation, le moyen d'éclairage 7 peut être constitué de plusieurs sources préférentiellement focalisées (supérieures et inférieures) n'étant pas dans le même plan que l'ensemble des lignes optiques de la caméra 6, pour éviter l'effet lune et créer une zone d'ombre dans le fond de visée de la caméra 6.

Le système visionique comprend encore un dispositif de traitement 8 configuré et/ou programmé pour analyser les images acquises et reconnaître les différents types de composants de la récolte, opérer leur localisation spatiale et leur discrimination en fonction de critères pré-établis de taille, de forme de transparence et/ou de couleur, afin de pouvoir séparer les baies en fonction de leur état et commander le système de séparation sélectif 10 afin de séparer, d'une part, les baies saines, mûres et entières, et, d'autre part, les autres composants de la récolte, corps étrangers encore présents parmi ces baies. Le dispositif de traitement 8 peut être construit autour d'un PC industriel ou de tout autre automate ou micro-ordinateur connu en soi.

Le dispositif de traitement 8 reçoit des informations du dispositif de vision artificielle 6. Chaque élément de l'image acquise est individualisé et positionné dans l'espace. En fonction de différents paramètres, par exemple de forme, de couleur ou toute autre caractéristique des baies, le dispositif de traitement effectue des choix et commande le système de séparation sélectif 10. Il est piloté par une interface homme/machine qui permet de sélectionner à volonté pour chaque rampe du système de séparation sélectif 10, les critères de tri.

Toujours en référence à la figure 7, afin d'améliorer le contraste de l'image acquise par le dispositif de vision artificielle 6, il est avantageusement disposé un fond de contraste 9 sur les lignes optiques du dispositif de vision artificielle 6 en arrière plan des composants de la récolte en mouvement, notamment, selon l'exemple intéressant précédemment décrit, en arrière plan des composants de la récolte éjectés du système d'amenée 3, 4, 5. Une image plus contrastée est ainsi obtenue, améliorant la qualité du traitement d'image ultérieur.

Selon un mode de réalisation préféré et avantageux, ce fond de contraste est réalisé sur un cylindre, ce dernier tournant à grande vitesse, comprise entre 1000 et 4000 tr/mn. Une valeur préférentielle de 2850 tr/mn a été retenue pour un moteur asynchrone à deux pôles à 50 Hz fonctionnant sur le réseau EdF. Un rouleau de 80 mm de diamètre permet d'offrir un fond adapté à l'application.

La rotation du cylindre présente, d'une part, l'avantage d'éjecter, par effet centrifuge, le jus ou les autres composants de la récolte, qui ne manquent pas de tomber sur le fond de contraste 9 au risque de rester collés sur sa surface, afin de le nettoyer, et, d'autre part, un éventuel élément collé sur le cylindre, du fait de la rotation, apparaît sur l'image de manière plus diffuse, de par un moyennage dans le temps et donc dans l'espace. Le risque de confusion avec un composant de la récolte s'en trouve diminué d'autant.

Le fond de contraste 9 est préférentiellement choisi d'une couleur peu représentée ou absente dans les objets à trier.

La couleur de ce fond de contraste 9 est avantageusement déterminé par l'application de l'une des relations ci-après :

- R/V ≥ 3 et R/B ≥ 3 ; ou

- V/R ≥ 3 et V/B ≥ 3 ; ou préférentiellement

- B/R ≥ 3 et B/V ≥ 3 ;
  dans lesquelles :

- R = niveau d'intensité de la couleur rouge capté par la ou les caméras du système d'acquisition d'images ;

- V = niveau d'intensité de la couleur verte capté par la ou les caméras du système d'acquisition d'images ;

- B = niveau d'intensité de la couleur bleue capté par la ou les caméras du système d'acquisition d'images.

Ledit fond de contraste peut être de couleur bleue, couleur pas ou peu présente dans les composants des différents types de vendange.

Comme illustré à la figure 11, le système de séparation sélectif 10 est constitué par au moins une rampe comprenant une pluralité de buses pneumatiques 10a, de préférence commandées par des électrovannes 10b ultra-rapides.

Chaque buse 10a est conçue et orientée de sorte à diriger un jet d'air en direction des composants de la récolte, dans une zone où lesdits composants sont en vol libre, à la sortie du convoyeur d'amenée 5. Le nombre de buses pneumatiques 10a correspond au nombre de couloirs mobiles 5e délimités par les brins parallèles 5d de la surface supérieure active 5c du convoyeur d'amenée 5 (c'est-à-dire au nombre d'alignements parallèles de baies de la récolte) et chacune desdites buses pneumatiques 10a se trouve placée dans un plan vertical passant par le milieu d'un alignement de baies.

Le système visionique est apte à identifier les différents composants de la récolte, à repérer au moins les baies saines, mûres et entières parmi les autres composants et à les localiser. En fonction de cette localisation, de la connaissance de la vitesse des composants, sensiblement égale à la vitesse de leur éjection du convoyeur d'amenée 5, de la distance b entre le plan de vision et le plan d'action du système de séparation 10, le dispositif de traitement 8 sait déterminer à quel instant le composant à séparer passe devant la buse pneumatique 10a correspondant au couloir mobile 5e contenant le composant à séparer. Le dispositif de traitement 8 peut commander l'électrovanne 10b correspondante en conséquence, afin de souffler ledit composant, en fonction du type d'objet identifié (baie entière, baie éclatée, corps étrangers). Certaines buses 10a soufflent ceux d'entre eux qui répondent à des critères de discrimination prédéfinis, de façon à modifier leur trajectoire naturelle initiale et à les faire tomber dans un réceptacle dédié. Il suffit de disposer deux réceptacles séparés, un premier en dessous de la trajectoire nominale récupérant les composants non soufflés et un autre à la réception des composants soufflés. On notera qu'il est possible de commander les buses 10a pour souffler au choix les baies saines, mûres et entières ou, au contraire, l'ensemble des autres composants indésirables de la récolte.

Il a été décrit, jusqu'à présent, une machine de tri comprenant une unique rampe 10 de buses 10a et réalisant un tri binaire. Selon un mode de réalisation alternatif la machine de tri comporte au moins deux rampes 10 de buses pneumatiques 10a superposées. Deux rampes 10 permettent un tri ternaire. Trois rampes 10 permettent un tri quaternaire, etc. Dans ce cas, des flancs 14 complètent le système de séparation sélectif 10. Un exemple de tri ternaire sépare les baies saines, mures et entières destinées à une vinification premium, les baies abîmées ou écrasées qui peuvent encore être utilisées pour une vinification de qualité moindre, des autres composants indésirables de la récolte.

Le convoyeur d'amenée 5 permet d'extraire la phase liquide et quelques corps étrangers longs et fins (tels que pétioles) du flux d'objets transportés, de canaliser, entre les cordes 5d, les baies et éventuellement les corps étrangers encore mêlés auxdites baies, et d'aligner lesdits objets avec l'axe des buses d'éjection 10a.

Selon un premier mode de réalisation, les buses pneumatiques 10a sont alignées avec les lignes optiques du dispositif de vision artificielle 6, pour rattrapage de défaut de parallaxe. Une telle configuration permet de compenser la dispersion des trajectoires observable à mesure que l'acquisition d'image est réalisée à distance du rouleau aval 5a du convoyeur d'amenée 5. Les objets à trier étant hétérogènes dans leur forme et dans leur effet collant, une dispersion de ces derniers par rapport à leur trajectoire théorique peut apparaître lors de leur vol libre. Certains objets passent plus loin des buses pneumatiques. Pour être certain de souffler les objets sélectionnés, les buses pneumatiques 10a, sont alignées avec les lignes optiques du dispositif de vision artificielle 6 qui présente un certain angle optique d'ouverture. Toutes les buses pneumatiques 10a sont alors orientées vers le foyer de la caméra 6.

Cependant un tel mode de réalisation d'une rampe de buses est délicat à réaliser et est par conséquent coûteux. La disposition précédemment décrite, à savoir de placer le plan optique au plus proche de l'extrémité aval du convoyeur d'amenée 5, en réduisant la dispersion des trajectoires, permet avantageusement selon un second mode de réalisation préférentiel, d'utiliser une rampe 10 de buses 10a à axes parallèles, plus simple à réaliser.

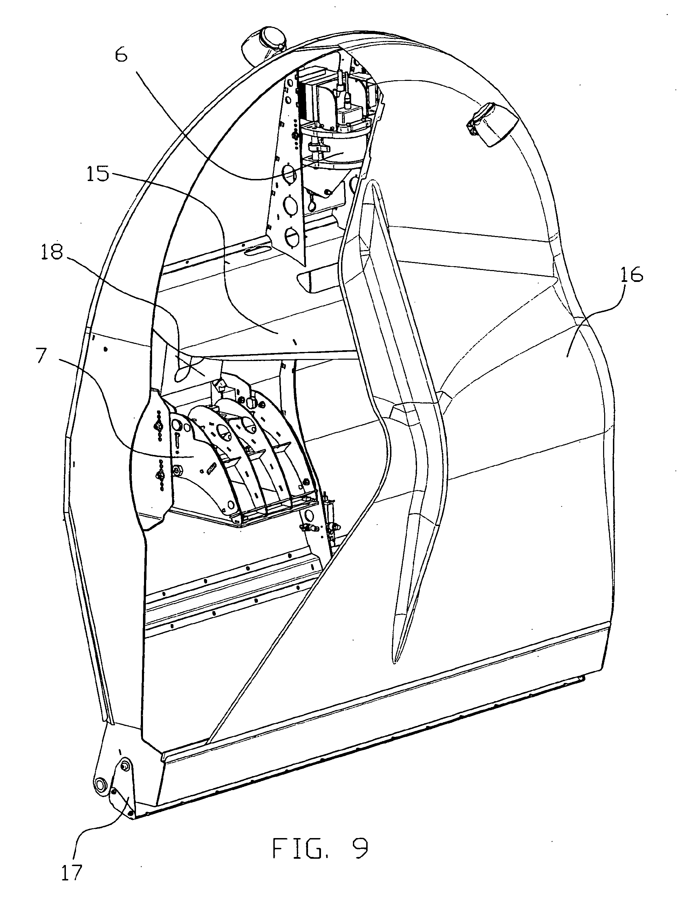

Le système visionique peut avantageusement être organisé sous forme d'un ensemble compact ou caisson 16, tel que, par exemple, représenté à la figure 9, abritant le capteur d'images 6 et le système d'éclairage 7. Ce caisson 16 est avantageusement muni, d'une part, d'un volet de fermeture 17 permettant de protéger le système visionique. Le volet de fermeture 17 se ferme automatiquement lors de la mise hors tension dudit système, et, d'autre part, un ventilateur 18 ou une source d'air comprimé permet de mettre ledit caisson 16 en surpression afin de créer un courant d'air sortant au niveau dudit volet de fermeture 17. Cela évite ainsi aux éventuelles projections de jus de rentrer et de venir perturber la vision, lors du fonctionnement de la machine. De même une casquette 15 protège le capteur 6 contre les éventuelles projections. Cette casquette 15 sert aussi avantageusement de déflecteur pour orienter le flux d'air des ventilateurs.

Sur la base d'une machine de tri selon l'un des modes de réalisation précédemment décrits, il est possible de construire une chaîne de tri, en lui adjoignant des équipements de pré ou de post traitement de la récolte.

Ainsi, par exemple, il est possible d'ajouter, en amont, un moyen de déversement de la récolte à trier sur la partie amont du système d'amenée. Le débit de ce moyen de déversement est avantageusement commandé par la machine de tri, afin de s'ajuster au débit de la machine de tri. Pour cela un capteur de récolte, peut être disposé au niveau du moyen de déversement, afin d'asservir le débit en amont de la machine de tri. Ce capteur peut être constitué, par un capteur de distance à ultrasons ou par un capteur à infrarouge.

Les baies ou autres composants triés peuvent être réceptionnés en aval de la machine de tri, dans des bacs, dans des pompes, sur des convoyeurs, dans des vis d'Archimède, directement dans des cuves, ou dans tout autre réservoir ou moyen de transfert.

La machine de tri selon l'invention, peut être alimentée par n'importe quel appareil d'amenée permettant de répartir les composants de la récolte sur toute la largeur du système d'amenée 3, 4, 5.

L'ensemble peut être interfacé au système de réception de la vendange, en entrée de cave, dans une chaîne de tri existante équipée soit d'un quai de réception, soit d'une remorque auto-vidante ou basculante.

La machine ou chaîne de tri peut être fixe ou mobile.

La chaîne de tri de l'invention peut comporter un module de supervision équipé d'une interface homme-machine et configuré pour commander tous les éléments de ladite chaîne de traitement et gérer leurs interactions.

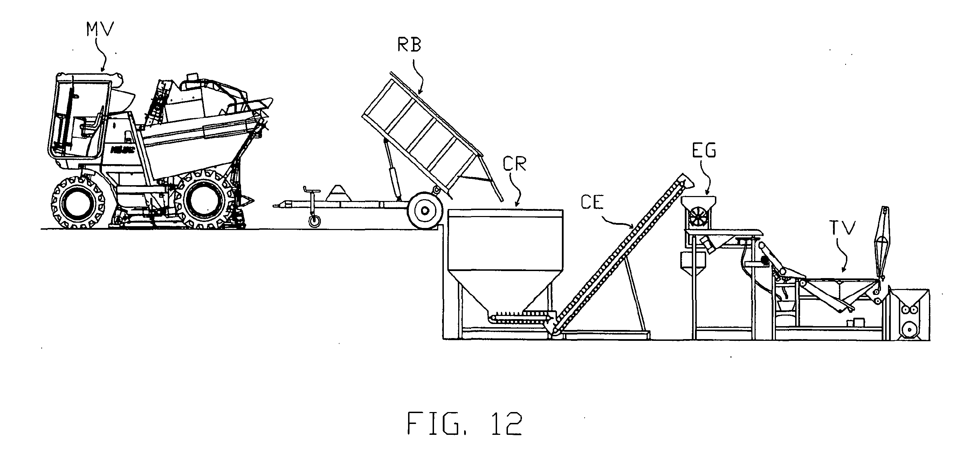

Les figures 12, 13 et 14 montrent différentes possibilités d'implantation (non exhaustives) de la machine de tri qui peut prendre plusieurs formes (mobile ou fixe).

La figure 12 illustre un premier exemple de configuration de la chaîne de tri selon lequel une machine à vendanger MV déverse la vendange dans une remorque auto-vidante ou dans une remorque basculante RB (comme représenté). Cette remorque déverse la vendange dans une cuve de réception CR. Cette dernière alimente régulièrement un dispositif d'égrenage EG, directement ou par l'intermédiaire d'un convoyeur élévateur CE. Le dispositif égreneur EG déverse la récolte éraflée sur une table de répartition vibrante permettant son étalement avant de tomber sur le convoyeur oblique de la machine de tri TV, montrée en poste fixe. Le débit est fixé par la cuve de réception CR et ajusté au débit de la machine de tri TV.

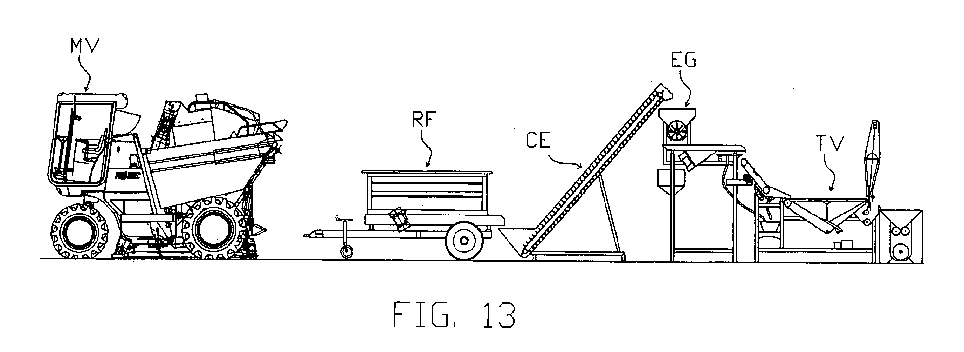

La figure 13 montre un deuxième exemple de configuration de la chaîne de tri suivant lequel une machine à vendanger MV, déverse la vendange dans une remorque à fond mouvant RF. Cette remorque à fond mouvant alimente régulièrement un dispositif d'éraflage ou d'égrenage EG, directement ou par l'intermédiaire d'un convoyeur élévateur CE. Le dispositif égreneur EG déverse la vendange éraflée sur une table de répartition vibrante permettant son étalement avant de tomber sur le convoyeur oblique de la machine de tri TV précédemment décrite, montrée en poste fixe. Le débit est fixé par la remorque à fond mouvant RF équipé d'un quelconque système d'auto-régulation pour être ajusté au débit de la machine de tri TV.

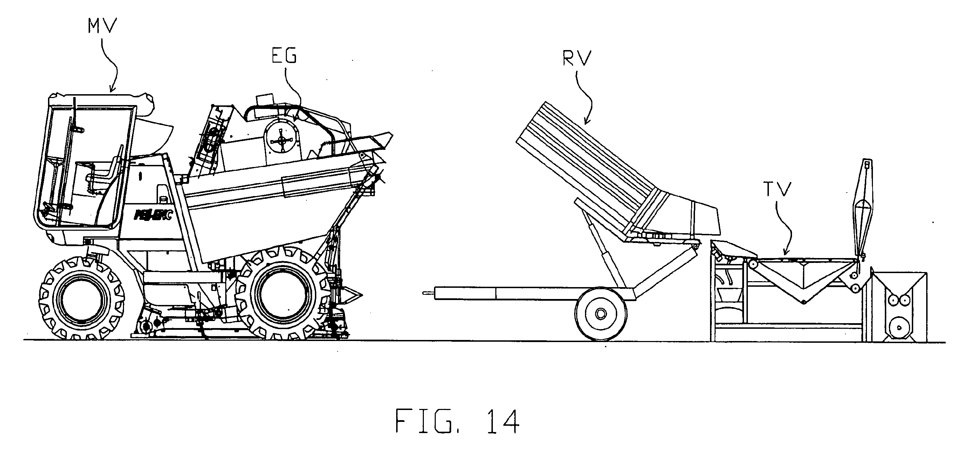

La figure 14 représente un troisième exemple de configuration de la chaîne de tri suivant lequel une machine à vendanger MV équipée d'un système d'éraflage, déverse la vendange dans une remorque basculante à bec vibrant RV. Ensuite, la remorque alimente régulièrement la machine de tri TV représentée en version poste fixe, sur le plan incliné de sa table vibrante. Le système de tri réalise l'asservissement du débit de la remorque basculante à bec vibrant RV. Cette configuration illustre une utilisation particulière d"une machine de tri sans convoyeur oblique 3, ce dernier étant escamotable en fonction des besoins et de la qualité de la récolte.

Les chaînes de tri illustrées aux figures 12 et 13 peuvent être appliquées au traitement de la récolte manuelle. Dans ce cas, elles ne comprennent pas de machine à vendanger, mais un système performant d'égrenage.

## Revendications

1. Machine de tri sélectif de récolte de baies, de vendange égrenée constituée de baies saines, mûres et entières, de baies immatures ou millerandées, de baies trop matures ou botrytisées, de baies écrasées ou éclatées, de feuilles, de rafles ou fragments de rafles, de pétioles, de débris divers et de jus collant, comprenant :

   - un système d'amenée (3, 4, 5) apte à alimenter un système visionique;
   - un système visionique (6, 7, 8, 9) :
   un système de séparation sélectif (10) des baies saines mûres et entières des autres composants de la récolte, commandé par le dispositif de traitement (8),
   ledit système d'amenée (3, 4, 5) étant agencé pour permettre d'étaler la récolte sur une seule couche, d'aligner, d'isoler individuellement, et de déplacer les composants de la récolte selon un mouvement rectiligne à vitesse régulée, afin de faire défiler individuellement lesdits composants de la récolte au travers du système visionique (6, 7, 8, 9), ce dernier étant configuré pour individualiser et repérer dans l'espace chaque élément afin
de commander le système de séparation sélectif (10), et **caracterisé par**

   - un dispositif de vision artificielle (6) permettant d'acquérir des images des composants de la récolte issus du système d'amenée (3, 4, 5); et
   - un dispositif de traitement (8) apte à analyser ces images pour reconnaître les composants de la récolte et les discriminer en fonction de critères pré-établis.

2. Machine de tri sélectif selon la revendication 1, **caractérisée en ce que** le système visionique (6, 7, 8, 9) comprend un dispositif de vision artificielle (6) constitué par un dispositif d'acquisition d'images (lignes de points ou matrice de points), par exemple une ou plusieurs caméras lignes ou une ou plusieurs caméras matricielles permettant d'enregistrer l'image des baies et corps étrangers à trier, dans leur mouvement, et un moyen d'éclairage (7) permettant d'éclairer les composants de la récolte durant l'acquisition d'image, consistant en un projecteur constitué par un ou plusieurs halogènes de large spectre lumineux, focalisé ou non, ou en un projecteur à leds blanches ou à leds RVB (rouge, vert, bleu), ou en un système à balayage laser, ou en une autre source de lumière de longueur d'ondes lumineuses particulièrement pertinentes pour déterminer un critère de discrimination, placé dans le même plan que l'ensemble des lignes optiques du dispositif de vision artificielle (6).

3. Machine de tri sélectif suivant l'une des revendications 1 ou 2, **caractérisée en ce que** le système visionique (6, 7, 8, 9) comprend un fond de contraste (9) disposé en arrière plan des composants de la récolte et orienté perpendiculairement à l'axe optique du dispositif de vision artificielle (6).

4. Machine de tri sélectif selon l'une quelconque des revendications 1 à 3, **caractérisée en ce que** le fond de contraste (9) présente une couleur peu représentée ou absente des baies des différents types de récolte.

5. Machine de tri sélectif selon la revendication 4, **caractérisée en ce que** la couleur du fond de contraste (9) est avantageusement déterminée par l'application de l'une des relations ci-après :

   - $R/V \geq 3$ et $R/B \geq 3$ ; ou
   - $V/R \geq 3$ et $V/B \geq 3$ ; ou préférentiellement
   - $B/R \geq 3$ et $B/V \geq 3$ ;
   dans lesquelles :
   - R = niveau d'intensité de la couleur rouge capté par la ou les caméras du système d'acquisition d'images;

- V = niveau d'intensité de la couleur verte capté par la ou les caméras du système d'acquisition d'images ;
- B = niveau d'intensité de la couleur bleue capté par la ou les caméras du système d'acquisition d'images.

6. Machine de tri selon l'une quelconque des revendications 1 à 5, **caractérisée en ce que** le plan de l'ensemble des lignes optiques du système visionique (6, 7, 8, 9) est sensiblement perpendiculaire aux trajectoires moyennes des composants de la récolte issus du système d'amenée (3, 4, 5).

7. Machine de tri selon l'une quelconque des revendications 1 à 6, **caractérisée en ce que** le système d'amenée (3, 4, 5) comprend un convoyeur d'amenée (5) horizontal ou sensiblement horizontal dont la surface supérieure porteuse (5c) est agencée pour déplacer les composants de la récolte sous forme d'une pluralité de files ou alignements séparés et parallèles, en direction de son extrémité aval.

8. Machine de tri suivant l'une quelconque des revendications 1 à 7, **caractérisée en ce que** les composants de la récolte sont éjectés à la sortie du système d'amenée (3, 4, 5), afin d'être analysés par le système visionique (6, 7, 8, 9), en vol libre.

9. Machine de tri selon la revendication 8, **caractérisée en ce que** le plan de l'ensemble des lignes optiques du système visionique (6, 7, 8, 9) est disposé le plus proche possible de l'extrémité aval du système d'amenée (3, 4, 5).

10. Machine de tri selon la revendication 9, **caractérisée en ce que** le plan de l'ensemble des lignes optiques du système visionique (6, 7, 8, 9) est disposé à une distance (a) de l'extrémité aval du système d'amenée (3, 4, 5) au moins égale au calibre (Xobj) du plus gros objet typique des composants de la récolte.

11. Machine de tri selon l'une des revendications 9 ou 10, **caractérisée en ce que** le plan d'action du système de séparation sélectif (10) est disposé à une distance (b) du plan de l'ensemble des lignes optiques du système visionique (6, 7, 8, 9) au moins égale à :

$$b = Xobj + Tr \times Vc,$$

avec :

- Xobj : calibre du plus gros objet typique des composants de la récolte,

- Tr : temps de réponse du système,
- Vc : vitesse du système d'amenée.

12. Machine de tri sélectif selon l'une quelconque des revendications 7 à 10, **caractérisée en ce que** le fond de contraste (9) est constitué par un cylindre rotatif (9), tournant à grande vitesse, afin d'éjecter le jus ou d'autres composants de la récolte éventuellement collés sur sa surface.

13. Machine de tri selon l'une quelconque des revendications 1 à 12, **caractérisée en ce que** la vitesse régulée du système d'amenée (3, 4, 5) est accordée avec la vitesse d'acquisition du système visionique (6, 7, 8, 9) afin de produire une image la moins déformée possible constituée de pixels sensiblement carrés.

14. Machine de tri selon la revendication 13, **caractérisée en ce que** la vitesse régulée du système d'amenée (3, 4, 5) est accordée avec la vitesse d'acquisition du système visionique (6, 7, 8, 9) afin de produire une image constituée de pixels carrés lorsque Vc = Va = (Lc / Np) x (1 / Tacq), avec :

- Vc : vitesse du système d'amenée,
- Va : vitesse d'acquisition du système visionique pour un pixel,
- Lc : largeur de la zone d'acquisition du système visionique,
- Tacq : temps d'acquisition du système visionique par ligne,
- Np : résolution du système visionique, en nombre de pixels par ligne.

15. Machine de tri selon l'une des revendications 13 ou 14, **caractérisée en ce que** la vitesse du convoyeur d'amenée (5) est comprise entre 1,5 et 4 m/s.

16. Machine de tri selon la revendication 15, **caractérisée en ce que** la vitesse du convoyeur d'amenée (5), lorsqu'elle est, par exemple, égale à Vc = 2,4 m/s, on a un temps d'acquisition du système visionique (6, 7, 8, 9) Tacq = 300 $\mu$s, une résolution du système visionique de Np = 1360 pixels et une largeur de la zone d'acquisition du système visionique de Lc = 1 m.

17. Machine de tri selon l'une quelconque des revendications 6 à 16, **caractérisée en ce que** la longueur utile du convoyeur d'amenée (5) est comprise entre 0,5 et 2,5 m.

18. Machine de tri selon l'une quelconque des revendications 6 à 17, **caractérisée en ce que** le rouleau de sortie (5b) du convoyeur d'amenée (5) présente un diamètre le plus petit possible, de préférence un diamètre de l'ordre de 30 mm, afin d'éviter un collage des composants de la récolte à la sortie du convoyeur d'amenée (5).

19. Machine de tri selon l'une quelconque des revendications 6 à 18, **caractérisée en ce que** le convoyeur d'amenée (5) est constitué par un convoyeur à cordes (5d) s'enroulant sur au moins deux rouleaux à gorges (5a, 5b) et dont la surface supérieure active (5c) est constituée par une pluralité de brins parallèles (5d).

20. Machine de tri selon la revendication 19, **caractérisée en ce que** les cordes (5d) sont tendues à 4 daN +/- 10%, avec un allongement correspondant de 1%.

21. Machine de tri selon l'une des revendications 19 ou 20, **caractérisée en ce que** les cordes (5d) comportent une gaine (5o) en polyuréthane rugueux entourant une âme (5p) en tresse polyester.

22. Machine de tri selon l'une quelconque des revendications 19 à 21, **caractérisée en ce que** les cordes (5d) présentent en surface des picots (5r) ou des ondulations (5q) formant un relief extérieur.

23. Machine de tri selon l'une quelconque des revendications 19 à 22, **caractérisée en ce que** l'espace ou pas (p) qui sépare deux brins parallèles adjacents (5d) de la surface supérieure active (5c) du convoyeur d'amenée (5) est inférieur au diamètre moyen (d) des baies (B) saines et entières, et suffisamment large pour laisser passer le jus ou les corps étrangers de petites dimensions.

24. Machine de tri selon l'une quelconque des revendications 19 à 23, **caractérisée en ce que** le convoyeur d'amenée (5) comprend encore au moins un troisième rouleau à gorges (5f) disposé à distance sous la surface active (5c) afin d'éloigner les cordes de ladite surface active (5c) et de dégager un volume apte à accueillir un réceptacle pour les composants de la récolte traversant les cordes au niveau de la surface active (5c).

25. Machine de tri selon l'une quelconque des revendications 19 à 24, **caractérisée en ce que** le convoyeur d'amenée (5) comprend encore au moins un rouleau à gorges intermédiaire (5g) disposé entre les deux rouleaux à gorges (5a, 5b) et au dessus du plan défini par les deux rouleaux à gorges (5a, 5b) afin de tendre et de soutenir les cordes au niveau de la surface active (5c).

26. Machine de tri suivant l'une quelconque des revendications 19 à 25, **caractérisée en ce que** le tapis transporteur du convoyeur d'amenée (5) est constitué par une pluralité d'anneaux de corde indépendants.

27. Machine de tri selon la revendication 26, **caractérisée en ce que** chaque anneau de corde est bouclé au moyen d'un joint (5h) dont la section est incluse dans le diamètre de la corde.

28. Machine de tri selon la revendication 27, **caractérisée en ce que** ledit joint (5h) est constitué par un joint démontable.

29. Machine de tri selon la revendication 28, **caractérisée en ce que** ledit joint démontable (5h) est constitué par un joint de cardan miniature.

30. Machine de tri selon l'une quelconque des revendications 1 à 29, **caractérisée en ce que** le système d'amenée (3, 4, 5) comprend encore un convoyeur oblique (3) disposé en amont du convoyeur d'amenée (5), et dont la surface active (3c) est animée d'un mouvement de bas en haut, dans un sens inverse au mouvement de chute de la récolte déversée sur ledit convoyeur oblique (3), la surface active (3c) dudit convoyeur oblique (3) étant lisse ou munie de tasseaux (3c).

31. Machine de tri selon la revendication 30, **caractérisée en ce que** la surface active (3c) du convoyeur oblique (3) présente une inclinaison réglable comprise entre 45 et 55° par rapport à l'horizontale et une vitesse comprise entre 0,05 et 0,3 m/s.

32. Machine de tri selon l'une des revendications 30 ou 31, **caractérisée en ce que** le convoyeur oblique (3) comprend encore un moyen de nettoyage (3e) apte à débarrasser ledit convoyeur oblique (3) des composants de la récolte éventuellement collés sur ladite surface active (3c).

33. Machine de tri selon l'une quelconque des revendications 30 à 32, **caractérisée en ce que** le système d'amenée (3, 4, 5) comprend encore un bec vibrant (4), disposé entre le convoyeur oblique (3) et le convoyeur d'amenée (5).

34. Machine de tri selon la revendication 33, **caractérisée en ce que** la surface active (4c) du bec vibrant (4) comprend un premier plan incliné (4d) disposé sous le convoyeur oblique (3) et sensiblement parallèle à ce dernier, et un second plan incliné (4e) présentant une inclinaison par rapport à l'horizontale comprise entre 0 et 10°.

35. Machine de tri selon l'une quelconque des revendications 1 à 34, **caractérisée en ce que** le système d'amenée (3, 4, 5) comporte au moins un dispositif de séparation et de récupération du jus, des autres composants de la récolte.

36. Machine de tri sélectif suivant l'une quelconque des revendications 1 à 35, **caractérisée en ce que**, le système de séparation sélectif (10) des baies saines mûres et entières des autres composants de la récolte, est constitué par au moins une rampe de buses pneumatiques (10a), de préférence commandées par des électrovannes ultra-rapides (10b) et dont le nombre correspond au nombre d'alignements parallèles des baies de la récolte sur la surface supérieure active (5c) du convoyeur d'amenée (5), chacune desdites buses pneumatiques (10a) étant placée dans un plan vertical passant par le milieu d'un alignement de baies.

**37.** Machine de tri selon la revendication 36, **caractérisée en ce qu'**elle comporte au moins deux rampes de buses pneumatiques (10a) superposées.

**38.** Machine de tri selon l'une des revendications 36 ou 37, **caractérisée en ce que** les buses pneumatiques (10a) sont alignées avec les lignes optiques du dispositif de vision artificielle (6), pour rattrapage de défaut de parallaxe.

**39.** Machine de tri suivant l'une quelconque des revendications 1 à 38, **caractérisée en ce que** le système visionique (6, 7, 8, 9) est organisé sous forme d'un ensemble compact ou caisson abritant le dispositif d'acquisition d'images (6) et le système d'éclairage (7), ce caisson (16) étant muni, d'une part, d'un volet de fermeture (17) permettant de protéger le système visionique, ce volet de fermeture (17) se fermant automatiquement lors de la mise hors tension dudit système, et, d'autre part, d'un ventilateur (18) ou d'une source d'air comprimé permettant de mettre ledit caisson en surpression afin de créer un courant d'air sortant au niveau dudit volet de fermeture (17).

**40.** Chaîne de tri, **caractérisée en ce qu'**elle comporte une machine de tri selon l'une quelconque des revendications 1 à 39, et pouvant être réalisée sous forme d'installation mobile automotrice ou tractée, ou sous forme d'installation travaillant à poste fixe.

**41.** Chaîne de tri selon la revendication 40, **caractérisée en ce qu'**elle comporte un moyen de déversement de la récolte à trier sur la partie amont du système d'amenée (3, 4, 5) commandé par la machine de tri afin d'ajuster le débit de déversement au débit de la machine de tri.

**Claims**

**1.** A selective sorting machine for a berry crop, for a destalked grape harvest formed by healthy, ripe and whole berries, unripe or shot berries, overripe or botrytised berries, crushed or burst berries, leaves, stalks or stalk fragments, leaf stalks, various debris and sticky juice, comprising:

- a supply system (3, 4, 5) for feeding a visionic system;
- a visionic system (6, 7, 8, 9);
- a selective separation system (10) for healthy, ripe and whole berries from the other components of the crop, controlled by the processing device (8),

said supply system (3, 4, 5) being arranged to permit the crop to be spread in a single layer, to align, to individually isolate and to displace the components of the crop in a rectilinear movement at a regulated speed so as to cause said components of the crop to pass individually through the visionic system (6, 7, 8, 9), the latter being adapted to individualise and recover in space each element in order to control the selective separation system (10), and **characterised by**
- an artificial vision device (6) making it possible to acquire images of the components of the crop coming from the supply system (3, 4, 5); and
- a processing device (8) adapted to analyse said images to recognise the components of the crop and differentiate them in dependence on pre-established criteria.

**2.** A selective sorting machine according to claim 1 **characterised in that** the visionic system (6, 7, 8, 9) comprises an artificial vision device (6) formed by an image acquisition device (lines of dots or dot matrix), for example one or more line cameras or one or more matrix cameras for recording the image of the crops and foreign bodies to be sorted, in the movement thereof, and a lighting means (7) for lighting the components of the crop during image acquisition, comprising a projector formed by one or more wide light spectrum halogens which are or are not focused or a projector comprising white LEDs or RGB LEDs (red, green, blue) or a laser scanning system, or another light source of particularly pertinent light wavelength for determining a differentiation criterion, which is placed in the same plane as all of the optical lines of the artificial vision device (6).

**3.** A selective sorting machine according to one of claims 1 and 2 **characterised in that** the visionic system (6, 7, 8, 9) comprises a contrast background (9) disposed as the background of the components of the crop and oriented perpendicularly to the optical axis of the artificial vision device (6).

**4.** A selective sorting machine according to any one of claims 1 to 3 **characterised in that** the contrast background (9) is of a colour that is little represented in or absent from the berries of the different types of crop.

**5.** A selective sorting machine according to claim 4 **characterised in that** the colour of the contrast background (9) is advantageously determined by the application of one of the following relationships:

- R/G ≥ 3 and R/B ≥ 3; or
- G/R ≥ and G/B ≥ 3; or preferably
- B/R ≥ 3 and B/G ≥ 3,
in which:
- R = the level of intensity of the colour red detected by the camera or cameras of the image acquisition system;
- G = the level of intensity of the colour green detected by the camera or cameras of the image acquisition system;
- B = the level of intensity of the colour blue detected by the camera or cameras of the image acquisition system.

**6.** A sorting machine according to any one of claims 1 to 5 **characterised in that** the plane of all of the optical lines of the visionic system (6, 7, 8, 9) is substantially perpendicular to the mean trajectories of the components of the crop issuing from the supply system (3, 4, 5).

**7.** A sorting machine according to any one of claims 1 to 6 **characterised in that** the supply system (3, 4, 5) comprises a horizontal or substantially horizontal supply conveyor (5) of which the upper supporting surface (5c) is arranged to displace the components of the crop in the form of a plurality of separate parallel lines or alignments in the direction of its downstream end.

**8.** A sorting machine according to any one of claims 1 to 7 **characterised in that** the components of the crop are ejected at the exit of the supply system (3, 4, 5) to be analysed by the visionic system (6, 7, 8, 9) in free flight.

**9.** A sorting machine according to claim 8 **characterised in that** the plane of all of the optical lines of the visionic system (6, 7, 8, 9) is disposed as closely as possible to the downstream end of the supply system (3, 4, 5).

**10.** A sorting machine according to claim 9 **characterised in that** the plane of all of the optical lines of the visionic system (6, 7, 8, 9) is disposed at a distance (a) from the downstream end of the supply system (3, 4, 5) that is at least equal to the calibre (Xobj) of the largest typical object of the components of the crop.

**11.** A sorting machine according to one of claims 9 and 10 **characterised in that** the plane of action of the selective separation system (10) is disposed at a distance (b) from the plane of all of the optical lines of the visionic system (6, 7, 8, 9), that is at least equal to:

$$b = Xobj + Tr \times Vc$$

with:

- Xobj: calibre of the largest typical object of the components of the crop,
- Tr: response time of the system, and
- Vc: speed of the supply system.

**12.** A selective sorting machine according to any one of claims 7 to 10 **characterised in that** the contrast background (9) is formed by a rotary cylinder (9) rotating at high speed to eject the juice or other components of the crop, that are possibly stuck to its surface.

**13.** A sorting machine according to any one of claims 1 to 12 **characterised in that** the regulated speed of the supply system (3, 4, 5) is matched to the acquisition speed of the visionic system (6, 7, 8, 9) to produce an image that is deformed as little as possible and formed by substantially square pixels.

**14.** A sorting machine according to claim 13 **characterised in that** the regulated speed of the supply system (3, 4, 5) is matched to the acquisition speed of the visionic system (6, 7, 8, 9) to produce an image formed by square pixels when Vc = Va = (Lc/Np) x (1/Tacq), with:

- Vc: speed of the supply system,
- Va: acquisition speed of the visionic system for a pixel,
- Lc: width of the acquisition zone of the visionic system,
- Tacq: acquisition time of the visionic system per line, and
- Np: resolution of the visionic system in number of pixels per line.

**15.** A sorting machine according to one of claims 13 and 14 **characterised in that** the speed of the supply conveyor (5) is between 1.5 and 4 m/s.

**16.** A sorting machine according to claim 15 **characterised in that** the speed of the supply conveyor (5) when it is for example equal to Vc = 2.4 m/s, there is an acquisition time of the visionic system (6, 7, 8, 9) Tacq = 300 μs, resolution of the visionic system of Np = 1360 pixels and a width of the acquisition zone of the visionic system of Lc = 1 m.

**17.** A sorting machine according to any one of claims 6 to 16 **characterised in that** the useful length of the supply conveyor (5) is between 0.5 and 2.5 m.

18. A sorting machine according to any one of claims 6 to 17 **characterised in that** the exit roller (5b) of the supply conveyor (5) is of the smallest possible diameter, preferably being a diameter of the order of 30 mm, to prevent the components of the crop from sticking at the exit from the supply conveyor (5).

19. A sorting machine according to any one of claims 6 to 18 **characterised in that** the supply conveyor (5) is formed by a cord conveyor (5d) which is wound around at least two grooved rollers (5a, 5b) and the upper active surface (5d) of which is formed by a plurality of parallel strands (5d).

20. A sorting machine according to claim 19 **characterised in that** the cords (5d) are tensioned at 4 daN +/- 10% with a corresponding elongation of 1%.

21. A sorting machine according to one of claims 19 and 20 **characterised in that** the cords (5d) comprise a sheath (5o) of rough polyurethane surrounding a core (5b) of polyester braid.

22. A sorting machine according to any one of claims 19 to 21 **characterised in that** the cords (5d) have at their surface pins (5r) or corrugations (5q) forming an external relief.

23. A sorting machine according to any one of claims 19 to 22 **characterised in that** the space or step (p) separating two adjacent parallel strands (5d) of the upper active surface (5c) of the supply conveyor (5) is less than the mean diameter (d) of the healthy and whole berries (B) and sufficiently wide to allow the juice or foreign bodies of small sizes to pass through.

24. A sorting machine according to any one of claims 19 to 23 **characterised in that** the supply conveyor (5) also comprises at least one third grooved roller (5f) disposed at a spacing under the active surface (5c) to move away the cords from said active surface (5c) and to open a volume capable of receiving a receptacle for the components of the crop that pass through the cords at the level of the active surface (5c).

25. A sorting machine according to any one of claims 19 to 24 **characterised in that** the supply conveyor (5) also comprises at least one intermediate grooved roller (5g) disposed between the two grooved rollers (5a, 5b) and above the plane defined by the two grooved rollers (5a, 5b) to tension and support the cords at the level of the active surface (5c).

26. A sorting machine according to any one of claims 19 to 25 **characterised in that** the transporting belt of the supply conveyor (5) is formed by a plurality of independent cord rings.

27. A sorting machine according to claim 26 **characterised in that** each cord ring is fastened by means of a joint (5h), the section of which is included in the diameter of the cord.

28. A sorting machine according to claim 27 **characterised in that** said joint (5h) is formed by a dismantleable joint.

29. A sorting machine according to claim 28 **characterised in that** said dismantleable joint (5h) is formed by a miniature cardan joint.

30. A sorting machine according to any one of claims 1 to 29 **characterised in that** the supply system (3, 4, 5) further comprises an inclined conveyor (3) disposed upstream of the supply conveyor (5) and the active surface (3c) of which is moved with an upward movement in an opposite direction to the falling movement of the crop which is discharged on to said inclined conveyor (3), the active surface (3c) of said inclined conveyor (3) being smooth or provided with ribs (3c).

31. A sorting machine according to claim 30 **characterised in that** the active surface (3c) of the inclined conveyor (3) is of an adjustable inclination of between 45 and 55° with respect to the horizontal and moves at a speed of between 0.05 and 0.3 m/s.

32. A sorting machine according to one of claims 30 and 31 **characterised in that** the inclined conveyor (3) further comprises a cleaning means (3e) for clearing the inclined conveyor (3) of the components of the crop, that are possibly stuck on said active surface (3c).

33. A sorting machine according to any one of claims 30 to 32 **characterised in that** the supply system (3, 4, 5) further comprises a vibrating beak (4) disposed between the inclined conveyor (3) and the supply conveyor (5).

34. A sorting machine according to claim 33 **characterised in that** the active surface (4c) of the vibrating beak (4) comprises a first inclined plane (4d) disposed below the inclined conveyor (3) and substantially parallel thereto, and a second inclined plane (4e) involving an inclination with respect to the horizontal of between 0 and 10°.

35. A sorting machine according to any one of claims 1 to 34 **characterised in that** the supply system (3, 4, 5) comprises at least one device for separation and recovery of the juice from the other components of the crop.

36. A selective sorting machine according to any one of claims 1 to 35 **characterised in that** the selective separation system (10) for the healthy, ripe and whole berries from the other components of the crop is formed by at least one array of pneumatic nozzles (10a) which are preferably controlled by ultra-fast electrically operated valves (10b) and the number of which corresponds to the number of parallel alignments of the berries of the crop on the upper active surface (5c) of the supply conveyor (5), each of said pneumatic nozzles (10a) being disposed in a vertical plane passing through the centre of an alignment of berries.

37. A sorting machine according to claim 36 **characterised in that** it comprises at least two arrays of pneumatic nozzles (10a) in mutually superposed relationship.

38. A sorting machine according to one of claims 36 and 37 **characterised in that** the pneumatic nozzles (10a) are aligned with the optical lines of the artificial vision device (6) for parallax defect compensation.

39. A sorting machine according to any one of claims 1 to 38 **characterised in that** the visionic system (6, 7, 8) is organised in the form of a compact assembly or case accommodating the image acquisition device (6) and the lighting system (7), said case (16) being provided on the one hand with a closure shutter (17) for protecting the visionic system, said closure shutter (17) closing automatically when said system is powered off and on the other hand a fan (18) or a compressed air source for putting said case under an increased pressure to create an air flow issuing at the level of said closure shutter (17).

40. A sorting chain **characterised in that** it comprises a sorting machine according to any one of claims 1 to 39 and which may be in the form of a mobile, self-propelled or towed installation or in the form of an installation operating at a fixed location.

41. A sorting chain according to claim 40 **characterised in that** it comprises a means for discharging the crop to be sorted on to the upstream part of the supply system (3, 4, 5), controlled by the sorting machine to adjust the discharge rate to the rate of the sorting machine.

**Patentansprüche**

1. Maschine zum selektiven Sortieren der Beerenobsternte der abgelösten Lese, die aus einwandfreiem, reifem und ganzem Beerenobst, unreifem Beerenobst oder jungfräulichen Beeren, überreifem oder botrytisiertem Beerenobst, zerquetschten oder geplatzten Beeren, Blättern, Kämmen oder Kammfragmenten, Blattstielen, verschiedenen Rückständen und klebrigem Saft gebildet wird und Folgendes umfasst:

- ein Zuführsystem (3, 4, 5), das fähig ist, ein Erkennungssystem zu speisen;
- ein Erkennungssystem (6, 7, 8, 9);
- ein System zum selektiven Trennen (10) von einwandfreiem und ganzem Beerenobst von anderen Bestandteilen der Ernte, das von der Verarbeitungsvorrichtung (8) gesteuert wird, wobei das Zuführsystem (3, 4, 5) so angeordnet ist, dass es das Ausbreiten der Ernte in einer einzigen Lage, das Ausrichten, einzelne Isolieren und Bewegen der Bestandteile der Ernte in einer geradlinigen Bewegung und mit regulierter Geschwindigkeit gestattet, um die Bestandteile der Ernte einzeln durch das Erkennungssystem (6, 7, 8, 9) zu führen, wobei Letzteres dafür konfiguriert ist, in dem Raum jedes Element einzeln zu erfassen und ausfindig zu machen, um das System zum selektiven Trennen (20) zu steuern, und **gekennzeichnet durch**
- eine Vorrichtung für künstliches Sehen (6), die es gestattet, Bilder von den Bestandteilen der Ernte, die aus dem Zuführsystem (3, 4, 5) kommen, zu erfassen; und
- eine Verarbeitungsvorrichtung (8), die fähig ist, diese Bilder zu analysieren, um die Bestandteile der Ernte zu erkennen und in Abhängigkeit von vorher festgelegten Kriterien zu unterscheiden.

2. Maschine zum selektiven Sortieren nach Anspruch 1, **dadurch gekennzeichnet, dass** das Erkennungssystem (6, 7, 8, 9) eine Vorrichtung für künstliches Sehen (6) umfasst, die aus einer Bilderfassungsvorrichtung (Punktzeilen oder Punktmatrix), zum Beispiel einer oder mehreren Zeilenkameras oder einer oder mehreren Matrixkameras, die ein Aufzeichnen des Bilds von den zu sortierenden Beeren und Fremdkörpern in ihrer Bewegung ermöglichen, und einer Beleuchtungseinrichtung (7) besteht, die ein Beleuchten der Bestandteile der Ernte während der Bilderfassung gestattet und aus einem Scheinwerfer besteht, der von einer oder mehreren fokussierten oder nicht fokussierten Halogenlampen mit großem Lichtspektrum oder aus einem Scheinwerfer mit weißen LEDs oder RGB-(rot/grün/blau) LEDs oder einem Laser-Abtastsystem oder einer anderen Lichtquelle mit besonders geeigneten Lichtwellenlängen gebildet ist, um ein Unterscheidungskriterium zu bestimmen, und in derselben Ebene platziert ist wie die Gesamtheit der optischen Zeilen der Vorrichtung für künstliches Sehen (6).

3. Maschine zum selektiven Sortieren nach einem der Ansprüche 1 oder 2, **dadurch gekennzeichnet, dass** das Erkennungssystem (6, 7, 8, 9) einen Kontrasthintergrund (9) umfasst, der im Hintergrund der Bestandteile der Ernte angeordnet und senkrecht zur optischen Achse der Vorrichtung für künstliches Sehen (6) ausgerichtet ist.

4. Maschine zum selektiven Sortieren nach einem der Ansprüche 1 bis 3, **dadurch gekennzeichnet, dass** der Kontrasthintergrund (9) eine in den Beeren der verschiedenen Erntetypen nur wenig vertretene oder fehlende Farbe aufweist.

5. Maschine zum selektiven Sortieren nach Anspruch 4, **dadurch gekennzeichnet, dass** die Farbe des Kontrasthintergrunds (9) vorteilhafterweise von der Anwendung einer der folgenden Beziehungen bestimmt wird:

   - $R/G \geq 3$ und $R/B \geq 3$; oder
   - $G/R \geq 3$ und $G/B \geq 3$; oder vorzugsweise
   - $B/R \geq 3$ und $B/G \geq 3$;
   wobei:
   - R = Intensitätsgrad der roten Farbe, die von der oder den Kameras des Bilderfassungssystems erfasst wird;
   - G = Intensitätsgrad der grünen Farbe, die von der oder den Kameras des Bilderfassungssystems erfasst wird;
   - B = Intensitätsgrad der blauen Farbe, die von der oder den Kameras des Bilderfassungssystems erfasst wird.

6. Maschine zum Sortieren nach einem der Ansprüche 1 bis 5, **dadurch gekennzeichnet, dass** die Ebene der Gesamtheit der optischen Zeilen des Erkennungssystems (6, 7, 8, 9) im Wesentlichen senkrecht zu den durchschnittlichen Bewegungsbahnen der Bestandteile der Ernte ist, die aus dem Zuführsystem (3, 4, 5) kommen.

7. Maschine zum Sortieren nach einem der Ansprüche 1 bis 6, **dadurch gekennzeichnet, dass** das Zuführsystem (3, 4, 5) ein horizontales oder im Wesentlichen horizontales Zuführförderband (5) umfasst, dessen obere Tragfläche (5c) so ausgelegt ist, dass die Bestandteile der Ernte in Form einer Vielzahl von Reihen oder getrennten und parallelen Spuren in Richtung auf sein nachgelagertes Ende bewegt werden.

8. Maschine zum Sortieren nach einem der Ansprüche 1 bis 7, **dadurch gekennzeichnet, dass** die Bestandteile der Ernte am Ausgang des Zuführsystems (3, 4, 5) ausgeworfen werden, um im freien Flug vom Erkennungssystem (6, 7, 8, 9) analysiert zu werden.

9. Maschine zum Sortieren nach Anspruch 8, **dadurch gekennzeichnet, dass** die Ebene der Gesamtheit der optischen Zeilen des Erkennungssystems (6, 7, 8, 9) so nah wie möglich am nachgelagerten Ende des Zuführsystems (3, 4, 5) angeordnet ist.

10. Maschine zum Sortieren nach Anspruch 9, **dadurch gekennzeichnet, dass** die Ebene der Gesamtheit der optischen Zeilen des Erkennungssystems (6, 7, 8, 9) in einer Entfernung (a) vom nachgelagerten Ende des Zuführsystems (3, 4, 5) angeordnet ist, die mindestens gleich dem Durchmesser (Xobj) des größten Objekts ist, das für Bestandteile der Ernte typisch ist.

11. Maschine zum Sortieren nach einem der Ansprüche 9 oder 10, **dadurch gekennzeichnet, dass** die Aktionsebene des Systems zum selektiven Trennen (10) in einer Entfernung (b) von der Ebene der Gesamtheit der optischen Zeilen des Erkennungssystems (6, 7, 8, 9) angeordnet ist, die mindestens Folgendem entspricht:

$$b = X_{obj} + T_r \times V_c,$$

wobei:

   - Xobj: Größe des größten für die Bestandteile der Ernte typischen Objekts,
   - Tr: Reaktionszeit des Systems,
   - Vc: Geschwindigkeit des Zuführsystems.

12. Maschine zum selektiven Sortieren nach einem der Ansprüche 7 bis 10, **dadurch gekennzeichnet, dass** der Kontrasthintergrund (9) von einem sich drehenden Zylinder (9) gebildet wird, der sich mit hoher Geschwindigkeit dreht, um den Saft oder andere Bestandteile der Ernte auszustoßen, die möglicherweise an seiner Oberfläche kleben geblieben sind.

13. Maschine zum Sortieren nach einem der Ansprüche 1 bis 12, **dadurch gekennzeichnet, dass** die geregelte Geschwindigkeit des Zuführsystems (3, 4, 5) mit der Erfassungsgeschwindigkeit des Erkennungssystems (6, 7, 8, 9) abgestimmt ist, um ein so wenig wie möglich verzerrtes Bild zu erzeugen, das aus im Wesentlichen quadratischen Pixeln besteht.

14. Maschine zum Sortieren nach einem der Ansprüche 9 oder 10, **dadurch gekennzeichnet, dass** die geregelte Geschwindigkeit des Zuführsystems (3, 4, 5) mit der Erfassungsgeschwindigkeit des Erkennungssystems (6, 7, 8, 9) abgestimmt ist, um ein Bild zu erzeugen, das aus quadratischen Pixeln besteht, wenn $V_c = V_a = (L_c/N_p) \times (1/T_{acq})$, wobei:

- Vc: Geschwindigkeit des Zuführsystems,
- Va: Erfassungsgeschwindigkeit des Erkennungssystems für ein Pixel,
- Lc: Größe des Erfassungsbereichs des Erkennungssystems,
- Tacq: Erfassungszeit des Erkennungssystems pro Zeile,
- Np: Auflösung des Erkennungssystems in Pixelanzahl pro Zeile.

15. Maschine zum Sortieren nach einem der Ansprüche 13 oder 14, **dadurch gekennzeichnet, dass** die Geschwindigkeit des Zuführförderbands (5) zwischen 1,5 und 4 m/s liegt.

16. Maschine zum Sortieren nach Anspruch 15, **dadurch gekennzeichnet, dass** man bei einer Geschwindigkeit des Zuführförderbands (5), wenn sie zum Beispiel gleich Vc = 2,4 m/s beträgt, eine Erfassungszeit des Erkennungssystems (6, 7, 8, 9) von Tacq = 300 μs, eine Auflösung des Erkennungssystems von Np = 1360 Pixel und eine Breite des Erfassungsbereichs des Erfassungssystems von Lc = 1 m erhält.

17. Maschine zum Sortieren nach einem der Ansprüche 6 bis 16, **dadurch gekennzeichnet, dass** die Nutzlänge des Zuführförderbands (5) zwischen 0,5 und 2,5 m beträgt.

18. Maschine zum Sortieren nach einem der Ansprüche 6 bis 17, **dadurch gekennzeichnet, dass** der Ausgangszylinder (5b) des Zuführförderbands (5) einen so kleinen Durchmesser wie möglich aufweist, vorzugsweise einen Durchmesser in der Größenordnung von 30 mm, um ein Ankleben der Bestandteile der Ernte am Ausgang des Zuführförderbands (5) zu vermeiden.

19. Maschine zum Sortieren nach einem der Ansprüche 6 bis 18, **dadurch gekennzeichnet, dass** das Zuführförderband (5) aus einem Förderband mit Seilen (5d) gebildet ist, die um mindestens zwei Walzen mit Einkehlungen (5a, 5b) umlaufen und deren obere aktive Fläche (5c) aus einer Vielzahl von parallelen Einzelseiltrumen gebildet wird.

20. Maschine zum Sortieren nach Anspruch 19, **dadurch gekennzeichnet, dass** die Seile (5d) mit 4 daN +/- 10 % und einer Dehnung gespannt sind, die 1 % entspricht.

21. Maschine zum Sortieren nach einem der Ansprüche 19 oder 20, **dadurch gekennzeichnet, dass** die Seile (5d) eine Ummantelung (5o) aus rauem Polyurethan aufweisen, die eine Seele (5p) aus Polyestergeflecht umgibt.

22. Maschine zum Sortieren nach einem der Ansprüche 19 bis 21, **dadurch gekennzeichnet, dass** die Seile (5d) eine Oberfläche mit Zähnchen (5r) oder Wellen (5q) aufweisen, die ein äußeres Relief bilden.

23. Maschine zum Sortieren nach einem der Ansprüche 19 bis 22, **dadurch gekennzeichnet, dass** der Raum oder Abstand (p), der zwei nebeneinander liegende parallele Einzelseiltrume (5d) der aktiven oberen Fläche (5c) des Zuführförderbands (5) trennt, kleiner als der durchschnittliche Durchmesser (d) der einwandfreien und ganzen Beeren (B) und ausreichend groß ist, um den Saft oder Fremdkörper mit kleinen Abmessungen durchzulassen.

24. Maschine zum Sortieren nach einem der Ansprüche 19 bis 23, **dadurch gekennzeichnet, dass** das Zuführförderband (5) noch mindestens eine dritte Walze mit Einkehlungen (5f) umfasst, die beabstandet unter der aktiven Fläche (5c) angeordnet ist, um die Seile von der aktiven Fläche (5c) fern zu halten und ein Volumen frei zu halten, das einen Behälter für die Bestandteile der Ernte aufnehmen kann, die die Seile auf der Ebene der aktiven Fläche (5c) überqueren.

25. Maschine zum Sortieren nach einem der Ansprüche 19 bis 24, **dadurch gekennzeichnet, dass** das Zuführförderband (5) noch mindestens eine Zwischenwalze mit Einkehlungen (5g) umfasst, die zwischen den zwei Walzen mit Einkehlungen (5a, 5b) und über der Ebene angeordnet ist, die durch die zwei Walzen mit Einkehlungen (5a, 5b) definiert wird, um die Seile auf der Höhe der aktiven Fläche (5c) zu spannen und zu halten.

26. Maschine zum Sortieren nach einem der Ansprüche 19 bis 25, **dadurch gekennzeichnet, dass** das Transportband des Zuführförderbandes (5) aus einer Vielzahl von voneinander unabhängigen Seilringen gebildet wird.

27. Maschine zum Sortieren nach Anspruch 26, **dadurch gekennzeichnet, dass** jeder Seilring mittels einer Verbindung (5h) geschlossen ist, deren Querschnitt in dem Seildurchmesser enthalten ist.

28. Maschine zum Sortieren nach Anspruch 27, **dadurch gekennzeichnet, dass** die Verbindung (5h) aus einer demontierbaren Verbindung gebildet ist.

29. Maschine zum Sortieren nach Anspruch 28, **dadurch gekennzeichnet, dass** die demontierbare Verbindung (5h) aus einem Miniatur-Kardangelenk gebildet ist.

30. Maschine zum Sortieren nach einem der Ansprüche 1 bis 29, **dadurch gekennzeichnet, dass** das Zuführsystem (3, 4, 5) ferner ein schräges Förderband (3) umfasst, das dem Zuführförderband (5) vorgelagert angeordnet ist und dessen aktive Fläche (3c) in einer von unten nach oben verlaufenden Bewegung in einer der Fallbewegung der Ernte, die auf das schräge Förderband (3) ausgeschüttet wird, entgegengesetzten Richtung angetrieben wird, wobei die aktive Fläche (3c) des schrägen Förderbands (3) glatt oder mit Leisten (3c) versehen ist.

31. Maschine zum Sortieren nach Anspruch 30, **dadurch gekennzeichnet, dass** die aktive Fläche (3c) des schrägen Förderbands (3) eine verstellbare Neigung, die zwischen 45 und 55° in Bezug auf die Horizontale liegt, und eine Geschwindigkeit zwischen 0,05 und 0,3 m/s aufweist.

32. Maschine zum Sortieren nach einem der Ansprüche 30 oder 31, **dadurch gekennzeichnet, dass** das schräge Förderband (3) ferner ein Mittel zum Reinigen (3e) umfasst, das fähig ist, das schräge Förderband (3) von Bestandteilen der Ernte zu befreien, die möglicherweise auf der aktiven Fläche (3c) kleben geblieben sind.

33. Maschine zum Sortieren nach einem der Ansprüche 30 bis 32, **dadurch gekennzeichnet, dass** das Zuführsystem (3, 4, 5) ferner einen vibrierenden Trichter (4) umfasst, der zwischen dem schrägen Förderband (3) und dem Zuführförderband (5) angeordnet ist.

34. Maschine zum Sortieren nach Anspruch 33, **dadurch gekennzeichnet, dass** die aktive Fläche (4c) des vibrierenden Trichters (4) eine erste geneigte Ebene (4d) aufweist, die unter dem schrägen Förderband (3) angeordnet ist und im Wesentlichen parallel zu Letzterem verläuft, und eine zweite geneigte Ebene (4e), die in Bezug auf die Horizontale eine Neigung zwischen 0 und 10° aufweist.

35. Maschine zum Sortieren nach einem der Ansprüche 1 bis 34, **dadurch gekennzeichnet, dass** das Zuführsystem (3, 4, 5) mindestens eine Vorrichtung zum Trennen und Auffangen des Safts und anderer Bestandteile der Ernte umfasst.

36. Maschine zum selektiven Sortieren nach einem der Ansprüche 1 bis 35, **dadurch gekennzeichnet, dass** das System zum selektiven Trennen (10) der einwandfreien reifen und ganzen Beeren von anderen Bestandteilen der Ernte aus mindestens einer Rampe von Luftdüsen (10a) gebildet wird, die vorzugsweise von superschnellen Elektroventilen (10b) gesteuert werden und deren Anzahl der Anzahl der parallelen Spuren von geernteten Beeren auf der oberen aktiven Fläche (5c) des Zuführförderbands (5) entspricht, wobei jede der Luftdüsen (10a) in einer vertikalen Ebene platziert ist, die durch die Mitte einer Spur von Beeren verläuft.

37. Maschine zum Sortieren nach Anspruch 36, **dadurch gekennzeichnet, dass** sie mindestens zwei übereinander angeordnete Rampen mit Luftdüsen (10) umfasst.

38. Maschine zum Sortieren nach einem der Ansprüche 36 oder 37, **dadurch gekennzeichnet, dass** die Luftdüsen (10a) mit den optischen Zeilen der Vorrichtung für künstliches Sehen (6) ausgerichtet sind, um Parallaxenfehler auszugleichen.

39. Maschine zum Sortieren nach einem der Ansprüche 1 bis 38, **dadurch gekennzeichnet, dass** das Erkennungssystem (6, 7, 8, 9) in Form einer kompakten Einheit oder eines Kastens eingerichtet ist, in dem die Bilderfassungsvorrichtung (6) und das Beleuchtungssystem (7) untergebracht sind, wobei dieser Kasten (16) einerseits mit einer Verschlußklappe (17), die den Schutz des Erkennungssystems ermöglicht, wobei sich diese Verschlußklappe (17) automatisch schließt, wenn das System abgeschaltet wird, und andererseits mit einem Lüfter (18) oder einer Druckluftquelle ausgestattet ist, die es ermöglicht, im Kasten einen Überdruck zu erzeugen, um einen auf der Höhe der Verschlußklappe (17) austretenden Luftstrom zu erzeugen.

40. Sortierstraße, **dadurch gekennzeichnet, dass** sie eine Maschine zum Sortieren nach einem der Ansprüche 1 bis 39 umfasst und in Form einer mobilen selbstfahrenden oder gezogenen Anlage oder einer stationär arbeitenden Anlage ausgeführt werden kann.

41. Sortierstraße nach Anspruch 40, **dadurch gekennzeichnet, dass** sie eine Einrichtung zum Ausschütten der zu sortierenden Ernte auf den dem Zuführsystem (3, 4, 5) vorgelagerten Teil umfasst, die von der Maschine zum Sortieren gesteuert wird, um die Schüttmenge der Sortierleistung der Maschine anzupassen.

# FIG. 1

EP 2 188 067 B1

EP 2 188 067 B1

3e  3a

3c

3f

3

3d

3b

FIG. 2

FIG. 3

FIG. 4

EP 2 188 067 B1

5h

5n

5m

5l

5d

5p

5o

5q

FIG. 5

5o

5r

5p

FIG. 6

FIG. 7

FIG. 8

FIG. 9

FIG. 10

FIG. 11

FIG. 12

EP 2 188 067 B1

FIG. 13

FIG. 14

**EP 2 188 067 B1**

**RÉFÉRENCES CITÉES DANS LA DESCRIPTION**

**Documents brevets cités dans la description**

- US 4901861 A
- EP 0719598 A
- US 5060290 A
- FR 2795599
- EP 0932456 A
- EP 0705650 A